# EUROPÄISCHE PATENTSCHRIFT

(11) **EP 2 736 655 B1**
(45) Veröffentlichungstag und Bekanntmachung des Hinweises auf die Patenterteilung: **18.08.2021**
(21) Anmeldenummer: 12720849.4
(22) Anmeldetag: 03.05.2012
(51) Int. Cl.: B05B 14/43, B05B 16/40, B01D 46/00

(54) **KOMPAKTE LACKIERANLAGE**
COMPACT PAINTING FACILITY
INSTALLATION COMPACTE DE MISE EN PEINTURE

(30) Priorität: 27.07.2011 DE 102011079951; 29.07.2011 DE 102011052298
(43) Veröffentlichungstag der Anmeldung: 04.06.2014
(60) Teilanmeldung: 20182367.1
(73) Patentinhaber: Dürr Systems AG, 74321 Bietigheim-Bissingen (DE)
(72) Erfinder: HOLLER, Sebastian, 70825 Korntal-Münchingen (DE); SCHEERER, Jan, 70190 Stuttgart (DE); HOLZHEIMER, Jens, 71732 Tamm (DE); WIELAND, Dietmar, 71336 Waiblingen (DE); BAITINGER, Michael, 71672 Marbach (DE); TOBISCH, Wolfgang, 70193 Stuttgart (DE)
(74) Vertreter: Hoeger, Stellrecht & Partner Patentanwälte mbB
(86) Internationale Anmeldenummer: PCT/EP2012/058165
(87) Internationale Veröffentlichungsnummer: WO 2013/013846

(56) Entgegenhaltungen:
- EP-A2- 1 704 925
- WO-A1-91/16141
- WO-A1-96/09898
- WO-A1-03/092907
- WO-A1-2010/069407
- DE-A1- 19 944 744
- None

## Beschreibung

Die vorliegende Erfindung betrifft eine Lackieranlage zum Lackieren von Werkstücken.

Beispielsweise aus der WO 2010/069407 A1 ist eine Lackieranlage bekannt, welche eine Abscheide- und/oder Filteranlage umfasst, die unterhalb der Lackierkabine angeordnet ist.

Der vorliegenden Erfindung liegt die Aufgabe zugrunde, eine Lackieranlage der eingangs genannten Art bereitzustellen, welche kompakt ausgebildet ist und ein zuverlässiges Abscheiden von Lack-Overspray aus einem Rohgasstrom ermöglicht.

Diese Aufgabe wird erfindungsgemäß dadurch gelöst, dass die Lackieranlage die Merkmale des Anspruchs 1 umfasst.

Auf eine Abscheide- und/oder Filteranlage wird nachfolgend vereinfachend als "Filteranlage" Bezug genommen.

Bei einer Ausgestaltung der Erfindung ist vorgesehen, dass mindestens eine Reingasleitung zumindest abschnittsweise innerhalb einer Außenkontur mindestens einer Filtervorrichtung angeordnet ist.

Unter einer Außenkontur der Filtervorrichtung ist in dieser Beschreibung und den beigefügten Ansprüchen die äußere Begrenzung des Raumbereichs zu verstehen, der, wenn jeder senkrecht zur Förderrichtung genommene Querschnitt der Filtervorrichtung längs der Förderrichtung bis zu den Enden der Lackieranlage bewegt wird, von mindestens einem dieser Querschnitte überstrichen wird.

Insbesondere dann, wenn mindestens eine Reingasleitung zumindest abschnittsweise innerhalb einer Außenkontur mindestens einer Filtervorrichtung angeordnet ist, kann die Filteranlage kompakt ausgebildet werden. Insbesondere kann hierbei vorgesehen sein, dass keine Reingasleitung über seitliche Begrenzungswände der Filteranlage hinaus ragt.

Die Bewegung eines Querschnitts längs der Förderrichtung zur Ermittlung der Außenkontur erfolgt so, dass der bewegte Querschnitt immer senkrecht zur lokalen Förderrichtung ausgerichtet ist. Bei einer nicht konstanten Förderrichtung (bei einem gekrümmten Förderweg) wird ein Querschnitt folglich während der Bewegung zu den Enden der Lackieranlage dem Verlauf der jeweils lokalen Förderrichtung entsprechend gedreht.

Insbesondere ist die Reingasleitung somit zumindest abschnittsweise innerhalb eines Raumbereichs angeordnet, welcher bei einer gedachten Verlängerung von zumindest näherungsweise parallel zur Förderrichtung verlaufenden Begrenzungswänden der Filtervorrichtung von diesen verlängerten Begrenzungswänden begrenzt wird.

Die mindestens eine Reingasleitung ist somit vorzugsweise zumindest abschnittsweise innerhalb einer horizontalen Projektion mindestens einer Filtervorrichtung längs der Förderrichtung angeordnet.

Vorzugsweise ist mindestens eine einer vertikalen Längsmittelebene der Lackierkabine abgewandte äußere Begrenzungswand mindestens einer Reingasleitung gleich weit oder weniger weit von der vertikalen Längsmittelebene der Lackierkabine beabstandet als eine der vertikalen Längsmittelebene der Lackierkabine abgewandte äußere Begrenzungswand der Filtervorrichtung.

Vorzugsweise ist ein Reingasstrom mittels mindestens einer zumindest näherungsweise vertikal ausgerichteten Reingasleitung entlang mindestens einer Filtervorrichtung zumindest näherungsweise vertikal nach unten führbar.

Insbesondere dann, wenn die Filteranlage mehrere in der Förderrichtung nacheinander angeordnete Filtervorrichtungen umfasst, kann vorgesehen sein, dass mindestens eine Reingasleitung zwischen zwei in der Förderrichtung nacheinander angeordneten Filtervorrichtungen angeordnet ist.

Mindestens eine Filtervorrichtung ist vorzugsweise als regenerierbare Filtervorrichtung ausgebildet.

Unter einer regenerierbaren Filtervorrichtung ist eine Abtrennvorrichtung zum Abtrennen von Verunreinigungen aus einem durch die Lackierkabine geführten Gasstrom, insbesondere zum Abtrennen von Lack-Overspray aus einem Overspray-Partikel enthaltenden Gasstrom, zu verstehen, bei welcher abgeschiedene Verunreinigungen abgereinigt werden können, ohne Filterelemente der Filtervorrichtung austauschen zu müssen.

Als eine erfindungsgemäße regenerierbare Filtervorrichtung (Filteranordnung) ist insbesondere auch eine Filtervorrichtung vorgesehen, die eines oder mehrere Trockenfilterelemente und/oder Trockenabscheidungsvorrichtungen aufweist, bei denen eine Reinigung eines Gasstromes im Wesentlichen ohne die Zugabe einer Flüssigkeit an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Bei einer regenerierbaren Filtervorrichtung kann ferner vorgesehen sein, dass die Filtervorrichtung mindestens ein Filterelement umfasst, welches im Filterbetrieb mit einer Sperrschicht und/oder einer Schutzschicht versehen ist, welche Filterhilfsmaterial, beispielsweise Steinmehl, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Als Lack kommt insbesondere Pulverlack oder Fluidlack in Betracht.

Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols), bezeichnet. Der Begriff "Fluidlack" umfasst insbesondere die Begriffe "Flüssiglack" und "Nasslack".

Bei der Verwendung von Fluidlack ist der Lack-Overspray aus der Lackierkabine somit ein Fluidlack-Overspray, bei der Verwendung von Nasslack ein Nasslack-Overspray.

Erfindungsgemäß ist vorgesehen, dass die Filteranlage mindestens einen Rohgasschacht umfasst, welcher bezüglich einer senkrecht zur Förderrichtung verlaufenden horizontalen Richtung im Wesentlichen mittig unter der Lackierkabine angeordnet ist.

Insbesondere kann hierbei vorgesehen sein, dass eine Einströmöffnung des Rohgasschachts bezüglich einer senkrecht zur Förderrichtung verlaufenden horizontalen Richtung im Wesentlichen mittig unter der Lackierkabine angeordnet ist.

Der Rohgasschacht dient vorzugsweise der Zuführung des Gasstroms aus der Lackierkabine zu mindestens einer Filtervorrichtung der Filteranlage.

Vorzugsweise wird der Rohgasschacht in einem Filterbetrieb der Filteranlage, in welchem der aus der Lackierkabine stammende Gasstrom gereinigt wird, von einem Gasstrom mit einer vertikalen Bewegungskomponente, insbesondere in im Wesentlichen vertikaler Richtung, durchströmt.

Ein unteres Ende des Rohgasschachts grenzt vorzugsweise an mindestens einen Einlasskanal mindestens einer Filtervorrichtung der Filteranlage an.

Günstig kann es sein, wenn mindestens zwei Filtervorrichtungen, vorzugsweise sämtliche Filtervorrichtungen der Filteranlage, bezüglich einer vertikalen Längsmittelebene der Lackierkabine auf derselben Seite des Rohgasschachts angeordnet sind.

Vorteilhaft kann es sein, wenn der Rohgasschacht sich von oberhalb mindestens eines Filterelements der mindestens einen Filtervorrichtung und/oder bis unterhalb mindestens eines Filterelements der mindestens einen Filtervorrichtung erstreckt.

Bei einer Ausgestaltung der Erfindung ist vorgesehen, dass die Filteranlage mindestens eine Reingasleitung umfasst, welche zumindest abschnittsweise räumlich unterhalb eines Rohgasschachts geführt, insbesondere unter dem Rohgasschacht angeordnet, ist. Auf diese Weise kann ein Rohgasstrom besonders einfach von der einen Seite der vertikalen Längsmittelebene der Lackierkabine auf die gegenüberliegende Seite geführt werden. Insbesondere kann mindestens eine Reingasleitung den Rohgasschacht ohne Kollision kreuzen.

Alternativ oder ergänzend hierzu kann vorgesehen sein, dass mindestens eine Reingasleitung zumindest abschnittsweise räumlich oberhalb eines Rohgasschachts geführt, insbesondere über dem Rohgasschacht angeordnet, ist und diesen somit vorzugsweise oberhalb desselben kreuzt.

Vorzugsweise erstreckt sich mindestens eine Reingasleitung unter dem Rohgasschacht hindurch und verläuft dabei vorzugsweise im Wesentlichen in horizontaler Richtung und/oder quer, insbesondere im Wesentlichen senkrecht, zur Förderrichtung.

Ferner kann vorgesehen sein, dass mindestens eine Reingasleitung zumindest abschnittsweise innerhalb einer vertikalen Projektion mindestens einer Filtervorrichtung unter und/oder über der mindestens einen Filtervorrichtung angeordnet ist.

Günstig kann es sein, wenn mindestens eine Reingasleitung zumindest abschnittsweise unterhalb, insbesondere unter, mindestens einer Filterhilfsmaterialeinbringeinrichtung, mindestens einem Filterhilfsmaterialaufnahmebehälter und/oder mindestens einer Einhausung mindestens einer Filtervorrichtung angeordnet ist.

Erfindungsgemäß ist vorgesehen, dass die Filteranlage eine Reingasleitung umfasst, welche den Rohgasschacht kreuzt und/oder durchquert.

Die Reingasleitung umfasst hierbei einen Abschnitt, der innerhalb des Rohgasschachts angeordnet ist, und kann einen oder mehrere weitere Abschnitte umfassen, die außerhalb des Rohgasschachts angeordnet sind.

Insbesondere kann vorgesehen sein, dass die Filteranlage eine Reingasleitung umfasst, welche im Bereich des oberen Endes des Rohgasschachts angeordnet ist und diesen durchquert.

Die Reingasleitung wird somit im Betrieb der Lackieranlage erfindungsgemäss von Rohgas umströmt. Mittels der Reingasleitung kann der Reingasstrom vorzugsweise von der einen Seite der vertikalen Längsmittelebene der Lackierkabine auf die gegenüberliegende Seite geführt werden.

Es kann aber auch vorgesehen sein, dass mindestens eine Reingasleitung an einer anderen Stelle zwischen dem unteren Ende und dem oberen Ende des Rohgasschachtes oder oberhalb des Rohgasschachtes, vorzugsweise unterhalb des Lackierkabinenbodens, angeordnet ist.

Die Reingasleitung verläuft vorzugsweise im Wesentlichen in horizontaler Richtung und/oder quer, insbesondere im Wesentlichen senkrecht, zur Förderrichtung.

Erfindungsgemäß ist vorgesehen, dass die Filteranlage mindestens einen Reingassammelkanal umfasst, in welchen mindestens zwei Reingasleitungen der Filteranlage münden. Auf diese Weise kann das Reingas besonders einfach mit lediglich einer Leitung, welche sich stromabwärts an den Reingassammelkanal anschließt, abgeführt werden.

Vorzugsweise erstreckt sich mindestens ein Reingassammelkanal zumindest näherungsweise parallel zur Förderrichtung.

Erfindungsgemäß ist ferner vorgesehen, dass der mindestens eine Reingassammelkanal einerseits und mindestens zwei Filtervorrichtungen der Filteranlage andererseits auf bezüglich einer vertikalen Längsmittelebene der Lackierkabine einander gegenüberliegenden Seiten der Filteranlage angeordnet sind.

Insbesondere kann vorgesehen sein, dass mindestens ein Reingassammelkanal der Filteranlage längs der Förderrichtung, insbesondere mittels einer sich längs der Förderrichtung erstreckenden Trennwand, in zwei Bereiche, nämlich einen stromaufwärtigen Bereich und einen stromabwärtigen Bereich, geteilt ist.

Mindestens zwei Reingasleitungen münden vorzugsweise in den stromaufwärtigen Bereich, welcher somit einen Mündungsbereich der zwei Bereiche des Reingassammelkanals bildet.

Vorzugsweise erfolgt bereits im Mündungsbereich der mindestens zwei Bereiche des Reingassammelkanals ein Durchmischen der mittels der mindestens zwei Reingasleitungen dem Reingassammelkanal zugeführten Reingasströme.

Bei einer Ausgestaltung der Erfindung ist vorgesehen, dass der stromabwärtige Bereich des Reingassammelkanals ein Abführungsbereich der zwei Bereiche des Reingassammelkanals ist, welcher der Abführung des Reingases aus der Filteranlage dient und beispielsweise mit einer Umluftführungsvorrichtung zur (erneuten) Zuführung des Reingasstroms zu der Lackierkabine und/oder mit einer Abluftführungsvorrichtung zum Entfernen des Rohgasstroms von der Lackieranlage in Fluidverbindung steht.

Der Mündungsbereich des Reingassammelkanals steht vorzugsweise mit dem Abführungsbereich des Reingassammelkanals mittels mindestens eines Ventilators in Fluidverbindung. Auf diese Weise kann besonders einfach das in dem Mündungsbereich des Reingassammelkanals angeordnete Gas dem Abführungsbereich des Reingassammelkanals zugeführt werden.

Vorteilhaft kann es sein, wenn der Mündungsbereich des Reingassammelkanals zumindest abschnittsweise, vorzugsweise vollständig, unterhalb, insbesondere unter, dem Abführungsbereich des Reingassammelkanals angeordnet ist.

Bei einer Ausgestaltung der Erfindung ist vorgesehen, dass mindestens ein Ventilator (Gebläse) direkt oder indirekt mittels eines Gaskanals an eine Trennwand mindestens eines Reingassammelkanals angeschlossen ist.

Vorteilhaft kann es sein, wenn mindestens ein Ventilator auf einem Boden, auf welchem die Lackieranlage im montierten Zustand aufgebaut ist, angeordnet ist und ein Gaskanal zur Verbindung des Ventilators mit der Trennwand vorgesehen ist.

Ferner kann vorgesehen sein, dass mindestens ein Ventilator mit einer Aufnahmevorrichtung (Gestell) versehen ist, wobei die Aufnahmevorrichtung auf dem Boden angeordnet und der mindestens eine Ventilator an, insbesondere auf, der Aufnahmevorrichtung angeordnet ist. Vorzugsweise ist ein Gaskanal zur Verbindung des Ventilators mit der Trennwand vorgesehen.

Günstig kann es sein, wenn mindestens ein Ventilator auf einer Trennwand mindestens eines Reingassammelkanals angeordnet ist und/oder in die Trennwand integriert ist. Auf diese Weise kann ein zusätzlicher Gaskanal zur Verbindung des Ventilators mit der Trennwand entbehrlich sein.

Bei einer weiteren Ausgestaltung der Erfindung ist vorgesehen, dass mindestens ein Ventilator an, insbesondere auf, einer Aufnahmevorrichtung angeordnet ist, welche an, insbesondere auf, einer Trennwand eines Reingassammelkanals angeordnet ist, wobei mindestens ein Gaskanal zur Verbindung des mindestens einen Ventilators mit der Trennwand vorgesehen ist.

Die Filteranlage umfasst vorzugsweise mindestens eine Konditioniervorrichtung zur Konditionierung mindestens eines Gasstroms, insbesondere mindestens eines Reingasstroms. Insbesondere kann vorgesehen sein, dass die Konditioniervorrichtung als Heizvorrichtung, Kühlvorrichtung, Befeuchtungsvorrichtung und/oder Entfeuchtungsvorrichtung ausgebildet ist.

Mindestens eine Konditioniervorrichtung ist vorzugsweise in einem Reingassammelkanal der Filteranlage oder bezüglich einer Strömungsrichtung des Gasstroms, insbesondere des Reingasstroms, vor einem Reingassammelkanal der Filteranlage angeordnet.

Zum Antreiben des Gasstroms umfasst die Filteranlage vorzugsweise mindestens einen Ventilator, beispielsweise mindestens einen Axialventilator.

Der mindestens eine Ventilator kann beispielsweise in der Reingasleitung und somit bezüglich einer Strömungsrichtung des Gasstroms vor einem Reingassammelkanal der Filteranlage angeordnet sein, in welchen die mindestens eine Reingasleitung mündet.

Alternativ oder ergänzend hierzu kann vorgesehen sein, dass mindestens ein Ventilator bezüglich der Strömungsrichtung des Gasstroms stromabwärts von der Reingasleitung und/oder von dem Reingassammelkanal angeordnet ist.

Mindestens ein Ventilator kann ein Laufrad umfassen, welches mittels eines Antriebs antreibbar ist.

Eine Drehachse des Laufrads des Ventilators kann im Wesentlichen horizontal und quer, vorzugsweise im Wesentlichen senkrecht, zu einer Längsrichtung der Lackierkabine und/oder zu einer Förderrichtung der Lackieranlage ausgerichtet sein.

Der Antrieb des Laufrads kann in einer senkrecht zu einer Längsrichtung der Lackierkabine und/oder senkrecht zu einer Förderrichtung gerichteten Querrichtung seitlich neben dem Ventilator, insbesondere seitlich neben dem Laufrad, angeordnet sein.

Der Antrieb des Laufrads kann zumindest teilweise, vorzugsweise im Wesentlichen vollständig, außerhalb der Grundfläche der Lackierkabine oder außerhalb einer vertikalen Projektion der Grundfläche der Lackierkabine angeordnet sein.

Die Drehachse des Laufrads des Ventilators kann aber auch anders ausgerichtet sein, beispielsweise im Wesentlichen horizontal und im Wesentlichen parallel zu einer Längsrichtung der Lackierkabine und/oder zu einer Förderrichtung. Ferner kann die Drehachse des Laufrads auch im Wesentlichen vertikal ausgerichtet sein.

Der Antrieb des Laufrads kann in einer Längsrichtung der Lackierkabine und/oder in einer Förderrichtung vor oder hinter dem Ventilator angeordnet sein.

Der Antrieb des Laufrads kann auch vertikal unter oder über dem Ventilator angeordnet sein.

Der Antrieb des Laufrads kann zumindest teilweise, vorzugsweise im Wesentlichen vollständig, innerhalb der Grundfläche der Lackierkabine oder innerhalb einer vertikalen Projektion der Grundfläche der Lackierkabine angeordnet sein.

Günstig kann es sein, wenn die Filteranlage mindestens eine Reingasleitung, mindestens einen Ventilator, mindestens eine Konditioniervorrichtung und/oder mindestens einen Reingassammelkanal umfasst, welche innerhalb einer vertikalen Projektion der Lackierkabine unter der Lackierkabine angeordnet sind.

Die Filteranlage umfasst vorzugsweise mindestens ein Filtermodul, welches zumindest einen Abschnitt mindestens eines Rohgasschachts, mindestens eine Filtervorrichtung, mindestens eine Reingasleitung, mindestens eine Konditioniervorrichtung, zumindest einen Abschnitt mindestens eines Reingassammelkanals und/oder mindestens einen Ventilator umfasst.

Ein Filtermodul ist dabei eine bauliche Einheit, welche die genannten Bestandteile zumindest vormontiert, vorzugsweise fertig montiert, umfasst, so dass das Filtermodul an einem vom Montageort der Lackierkabine verschiedenen Ort vormontiert bzw. fertiggestellt werden kann und nach einem Transport an den Montageort mit geringem Montageaufwand mit den übrigen Komponenten der Lackieranlage verbunden werden kann.

Die Filteranlage umfasst vorzugsweise mindestens zwei Filtermodule.

Insbesondere dann, wenn das Filtermodul zumindest einen Abschnitt mindestens eines Reingassammelkanals und/oder mindestens eines Rohgasschachts umfasst, kann durch eine Aneinanderreihung der Filtermodule in der Förderrichtung der Fördervorrichtung der Lackieranlage und durch eine fluiddichte Verbindung der einzelnen Abschnitte des mindestens einen Reingassammelkanals bzw. des mindestens einen Rohgasschachts miteinander der mindestens eine Reingassammelkanal bzw. der mindestens eine Rohgasschacht fertiggestellt werden.

Vorteilhaft kann es sein, wenn mindestens ein Sicherheitsfilter (Polizeifilter, Notfilter) in mindestens einer Reingasleitung und/oder in dem Reingassammelkanal vorgesehen ist, um im Falle einer Beschädigung einer Filtervorrichtung, beispielsweise einer Beschädigung eines Filterelements einer Filtervorrichtung, ein unerwünschtes Eindringen von Filterhilfsmaterial und/oder Overspray-Partikeln in die reinzuhaltenden Bereiche der Filteranlage zu verhindern.

Ferner ist ein Filtermodul zur Verwendung in einer Filteranlage einer Lackieranlage beschrieben, wobei das Filtermodul mindestens eine Filtervorrichtung, mindestens eine Reingasleitung, mindestens eine Konditioniervorrichtung, mindestens einen Rohgasschachtabschnitt, mindestens einen Reingassammelkanalabschnitt und/oder mindestens einen Ventilator umfasst.

Weiterhin ist eine (nicht erfindungsgemässe) Lackieranlage beschrieben, welche eine besonders zuverlässige Abtrennung von Lack-Overspray aus einem Rohgasstrom ermöglicht.

Diese zeichnet sich dadurch aus, dass bei der Lackieranlage mindestens eine Filtervorrichtung zum Abtrennen von Lack-Overspray aus einem Overspray-Partikel enthaltenden Rohgasstrom Folgendes umfasst:
- eine Einhausung, welche eine Rohgaskammer der Filtervorrichtung begrenzt und in welcher mindestens ein Filterelement der Filtervorrichtung angeordnet ist;
- mindestens einen Einlasskanal zum Einlassen des Rohgasstroms in die Rohgaskammer der Filtervorrichtung; und
- mindestens eine Filterhilfsmaterialeinbringeinrichtung zum Einbringen von Filterhilfsmaterial in den Rohgasstrom.

Dadurch, dass mindestens eine Filterhilfsmaterialeinbringeinrichtung zum Einbringen von Filterhilfsmaterial in den Rohgasstrom vorgesehen ist, kann dem Rohgasstrom besonders einfach Filterhilfsmaterial zugeführt werden, so dass eine effiziente und zuverlässige Abtrennung von Lack-Overspray aus dem Rohgasstrom möglich ist. Insbesondere kann hierdurch auf eine Druckluftvorrichtung zum Aufwirbeln von Filterhilfsmaterial verzichtet werden.

Mindestens ein Einlasskanal mindestens einer Filtervorrichtung ist vorzugsweise so ausgebildet, dass der Rohgasstrom in einem spitzen Winkel zur Horizontalen in die Rohgaskammer führbar ist.

Vorteilhaft kann es sein, wenn mindestens eine Filterhilfsmaterialeinbringeinrichtung eine Behandlungsvorrichtung zum mechanischen Behandeln von Filterhilfsmaterial und/oder eines Gemisches aus Filterhilfsmaterial und Overspray-Partikeln umfasst.

Unter einem "mechanischen Behandeln" von Filterhilfsmaterial oder eines Gemisches aus Filterhilfsmaterial und Overspray-Partikeln ist ein Behandeln derart zu verstehen, dass die Behandlungsvorrichtung in direktem Kontakt mit dem Filterhilfsmaterial bzw. mit dem Gemisch aus Filterhilfsmaterial und Overspray-Partikeln kommt, um dieses beispielsweise zu bewegen, zu fördern, zu vermischen, zu zermahlen und/oder aufzulockern.

Günstig kann es sein, wenn die Behandlungsvorrichtung als eine Mischvorrichtung ausgebildet ist.

Insbesondere kann vorgesehen sein, dass eine Mischvorrichtung zum Mischen von Filterhilfsmaterial, welches mit Lack-Overspray beladen ist, und von nicht oder in geringem Ausmaß mit Lack-Overspray beladenem Filterhilfsmaterial dient.

Mindestens eine Behandlungsvorrichtung zum mechanischen Behandeln umfasst vorzugsweise mindestens ein Behandlungselement, welches beispielsweise als Paddel ausgebildet und um eine Achse drehbar ist.

Mindestens eine Behandlungsvorrichtung dient vorzugsweise dem Aufbrechen von Agglomeraten aus Filterhilfsmaterial und Lack-Overspray.

Mindestens eine Behandlungsvorrichtung umfasst vorzugsweise mindestens ein Auflockerungselement zum Auflockern von Filterhilfsmaterial. Insbesondere kann hierbei vorgesehen sein, dass mindestens ein Auflockerungselement als ein Paddel und/oder als eine Schaufel ausgebildet ist.

Mindestens ein Auflockerungselement ist insbesondere dazu vorgesehen, das Filterhilfsmaterial (oder das Gemisch aus Filterhilfsmaterial und Overspray-Partikeln) derart in eine innere Bewegung zu versetzen, dass ein Anteil von mehr als 10% der Partikel (Filterhilfsmaterialpartikel und/oder Overspray-Partikel; bezogen auf die Gesamtmasse, die Partikelanzahl und/oder das Gesamtvolumen) relativ zu benachbart liegenden Partikeln bewegt werden. Daraus ergibt sich eine Auflockerung, Durchmischung, Förderung und/oder Zerkleinerung. Bei letzterem arbeitet mindestens ein Auflockerungselement mit mindestens einem Gegenstück zusammen, wobei das mindestens eine Auflockerungselement und das mindestens eine Gegenstück im Normalbetrieb vorzugsweise unterschiedliche Geschwindigkeiten aufweisen und so das Filterhilfsmaterial zwischen dem mindestens einen Auflockerungselement und dem mindestens einen Gegenstück mechanisch bearbeitet werden kann.

Mindestens eine Behandlungsvorrichtung umfasst vorzugsweise mindestens ein Förderelement zum Fördern von Filterhilfsmaterial, beispielsweise in einer Richtung parallel zur Förderrichtung der Fördervorrichtung der Lackieranlage.

Ferner kann vorgesehen sein, das mindestens eine Behandlungsvorrichtung mindestens ein um eine beispielsweise horizontal, insbesondere im Wesentlichen parallel zur Förderrichtung, verlaufende Rotationsachse drehbares Behandlungselement, welches beispielsweise als Auflockerungselement, Mischelement und/oder Förderelement ausgebildet ist, umfasst.

Ein der Rohgaskammer zugeführter Rohgasstrom ist vorzugsweise so gerichtet, dass er quer, insbesondere im Wesentlichen senkrecht, zu der Rotationsachse der Behandlungsvorrichtung in die Rohgaskammer einströmt. Insbesondere kann vorgesehen sein, dass der Rohgasstrom im Wesentlichen senkrecht auf die Rotationsachse mindestens einer Behandlungsvorrichtung gerichtet ist.

Vorteilhaft kann es sein, wenn mindestens eine Behandlungsvorrichtung mit einer Entnahmevorrichtung der Filtervorrichtung, beispielsweise mit einer Entnahmeöffnung zum Entnehmen von Filterhilfsmaterial aus der Rohgaskammer der Filtervorrichtung, zusammenwirkt. Insbesondere kann vorgesehen sein, dass die Behandlungsvorrichtung die Förderung von Filterhilfsmaterial oder eines Gemisches aus Filterhilfsmaterial und Overspray-Partikeln zu einer Entnahmeöffnung hin ermöglicht.

Alternativ oder ergänzend hierzu kann vorgesehen sein, dass mittels mindestens einer Behandlungsvorrichtung eine gleichmäßige Verteilung von Filterhilfsmaterial oder eines Gemisches von Filterhilfsmaterial und Overspray-Partikeln in einem Filterhilfsmaterialaufnahmebehälter der Filtervorrichtung erzielbar ist.

Vorzugsweise ist mindestens eine Filterhilfsmaterialeinbringeinrichtung in einem Filterhilfsmaterialaufnahmebehälter mindestens einer Filtervorrichtung angeordnet.

Ferner wird eine (nicht erfindungsgemässe) Lackieranlage beschrieben, welche eine Filteranlage umfasst, bei der mindestens eine Strömungsführungsvorrichtung zur Beeinflussung der Strömung eines Rohgasstroms vorgesehen ist.

Dies eröffnet die Möglichkeit, eine Lackieranlage bereitzustellen, welche eine Filteranlage umfasst, die ein zuverlässiges Abscheiden von Lack-Overspray aus einem Rohgasstrom ermöglicht.

Umgesetzt wird dies dadurch, dass mindestens eine Strömungsführungsvorrichtung mindestens ein Strömungsbeeinflussungselement umfasst.

Hierdurch kann ein Rohgasstrom besonders vorteilhaft beeinflusst werden, um Lack-Overspray zuverlässig aus dem Rohgasstrom abscheiden zu können.

Im Sinne einer einfacheren Bezugnahme wird ein "Strömungsbeeinflussungselement" nachfolgend als ein "Strömungselement" bezeichnet.

Bei einer Ausgestaltung ist vorgesehen, dass mindestens eine Filterhilfsmaterialeinbringeinrichtung eine Strömungsführungsvorrichtung zur Beeinflussung der Strömung des Rohgasstroms umfasst, welche mindestens ein Strömungselement umfasst.

Vorteilhaft kann es sein, wenn mindestens eine Strömungsführungsvorrichtung mindestens ein hinsichtlich Gestalt und/oder Anordnung und/oder Ausrichtung variables Strömungselement umfasst. Auf diese Weise kann der Rohgasstrom zur Auflockerung und/oder Aufwirbelung von Filterhilfsmaterial und somit zum Einbringen von Filterhilfsmaterial in den Rohgasstrom genutzt werden.

Insbesondere kann vorgesehen sein, dass mindestens ein variables Strömungselement als ein verstellbar und/oder verschwenkbar angeordnetes Leitblech ausgebildet ist.

Vorteilhaft kann es sein, wenn mindestens eine Strömungsführungsvorrichtung zumindest teilweise in mindestens einem Einlasskanal der Filtervorrichtung angeordnet ist. Insbesondere kann vorgesehen sein, dass mindestens eine Strömungsführungsvorrichtung eine Begrenzung des Einlasskanals bildet.

Mindestens ein Strömungselement mindestens einer Strömungsführungsvorrichtung ist vorzugsweise vor, in und/oder nach einem Betrieb der Filtervorrichtung hinsichtlich Gestalt und/oder Anordnung und/oder Ausrichtung variabel. Insbesondere kann vorgesehen sein, dass mindestens ein Strömungselement vor, in und/oder nach einem Filterbetrieb, in welchem mittels der Filtervorrichtung ein Rohgasstrom gereinigt werden kann, hinsichtlich Gestalt und/oder Anordnung und/oder Ausrichtung variabel ist. Ferner kann vorgesehen sein, dass mindestens ein Strömungselement vor, in und/oder nach einem Abreinigungsbetrieb der Filtervorrichtung, in welchem mindestens ein Filterelement der Filtervorrichtung abgereinigt, das heißt von anhaftendem Filterhilfsmaterial und Lack-Overspray befreit, werden kann, hinsichtlich Gestalt und/oder Anordnung und/oder Ausrichtung variabel ist.

Mindestens ein Strömungselement mindestens einer Strömungsführungsvorrichtung ist ferner vorzugsweise vor einer Inbetriebnahme der Filtervorrichtung voreinstellbar und/oder während eines Betriebs, insbesondere eines Filterbetriebs, der Filtervorrichtung automatisch einstellbar, insbesondere selbsteinstellend.

Besonders günstig kann es sein, wenn mindestens ein variables Strömungselement mindestens einer Strömungsführungsvorrichtung automatisch an unterschiedliche Strömungszustände im Betrieb der Filtervorrichtung, insbesondere im Filterbetrieb der Filtervorrichtung, anpassbar ist.

Vorteilhaft kann es sein, wenn mindestens ein variables Strömungselement mindestens einer Strömungsführungsvorrichtung sich bauartbedingt, insbesondere durch sein Eigengewicht, selbsttätig an unterschiedliche Strömungszustände im Betrieb der Filtervorrichtung, insbesondere an einen Volumenstrom des Rohgasstroms, anpasst.

Beispielsweise kann vorgesehen sein, dass die Masse mindestens eines Strömungselements so gewählt wird, dass sich durch einen hinsichtlich seines Volumenstroms variierenden Rohgasstrom automatisch ein variierender Öffnungsquerschnitt des Einlasskanals in einer Richtung senkrecht zur Strömungsrichtung des Rohgasstroms im Einlasskanal ergibt.

Mindestens ein Strömungselement mindestens einer Strömungsführungsvorrichtung ist vorzugsweise so ausgebildet, dass ein Winkel, unter welchem der Rohgasstrom in die Rohgaskammer einströmt, mittels des mindestens einen Strömungselements einstellbar ist.

Vorteilhaft kann es sein, wenn mittels mindestens eines Strömungselements mindestens einer Strömungsführungsvorrichtung die Geschwindigkeit des in die Rohgaskammer einströmenden Rohgasstroms beeinflusst, insbesondere erhöht, werden kann. Unter der Geschwindigkeit eines Gasstroms ist dabei die mittlere Geschwindigkeit des Gasstroms zu verstehen, wobei lokale Geschwindigkeitsunterschiede, welche beispielsweise aus Turbulenzen resultieren, außer Acht gelassen werden.

Insbesondere kann hierbei vorgesehen sein, dass mittels mindestens eines Strömungselements mindestens einer Strömungsführungsvorrichtung die Geschwindigkeit des Rohgasstroms in mindestens einem Einlasskanal mindestens einer Filtervorrichtung gegenüber der Geschwindigkeit des Rohgasstroms in mindestens einem Rohgasschacht der Filteranlage beeinflusst, insbesondere erhöht, wird.

Günstig kann es sein, wenn mittels mindestens einer Strömungsführungsvorrichtung und/oder mittels mindestens eines Einlasskanals mindestens einer Filtervorrichtung ein durch mindestens einen Rohgasschacht geführter Rohgasstrom bezüglich der vertikalen Längsmittelebene der Lackierkabine asymmetrisch, insbesondere nur zu einer Seite der vertikalen Längsmittelebene der Lackierkabine hin, weggeleitet oder umgelenkt wird.

Vorteilhaft kann es sein, wenn mittels mindestens einer Strömungsführungsvorrichtung der in die Rohgaskammer eingeleitete Rohgasstrom direkt in mindestens einen Filterhilfsmaterialaufnahmebehälter mindestens einer Filtervorrichtung gerichtet wird. Vorteilhaft kann es sein, wenn hierdurch Filterhilfsmaterial von dem Rohgasstrom aufgewirbelt und/oder aufgenommen wird. Der mit Filterhilfsmaterial und mit Overspray-Partikeln beladene Rohgasstrom wird vorzugsweise mit vertikaler Bewegungskomponente, beispielsweise im Wesentlichen vertikal nach oben, abgelenkt und/oder im Wesentlichen vertikal nach oben strömend oder zumindest mit einer vertikal nach oben gerichteten Bewegungskomponente mindestens einem Filterelement mindestens einer Filtervorrichtung zugeführt.

Die Verwendung von mindestens einem variablen Strömungselement mindestens einer Strömungsführungsvorrichtung bietet vorzugsweise den Vorteil, dass der in die Rohgaskammer eingeleitete Rohgasstrom gezielt mindestens einem Filterhilfsmaterialaufnahmebehälter mindestens einer Filtervorrichtung zuführbar ist.

Bei einer Ausgestaltung ist vorgesehen, dass mindestens ein Strömungselement als Leitblech ausgebildet ist. Auf diese Weise kann der Rohgasstrom gezielt in eine vorgegebene Richtung geführt werden. Vorteilhaft kann es sein, wenn mindestens ein Strömungselement manuell eingestellt und in einer bevorzugten Winkelposition fixiert wird.

Alternativ oder ergänzend hierzu kann vorgesehen sein, dass mindestens ein Strömungselement als ein selbstjustierendes Strömungselement ausgebildet ist. So kann beispielsweise vorgesehen sein, dass das mindestens eine Strömungselement eine geringe Masse aufweist, so dass es dann, wenn der Filtervorrichtung kein Rohgasstrom zugeführt wird, aufgrund der Schwerkraft mindestens einen Einlasskanal mindestens einer Filtervorrichtung schließt und somit insbesondere ein Austreten von Filterhilfsmaterial aus der Filtervorrichtung entgegen einer Strömungsrichtung des Rohgasstroms zurück in die Lackierkabine verhindert.

Mindestens ein Strömungselement mindestens einer Strömungsführungsvorrichtung ist hierzu vorzugsweise um eine quer, insbesondere im Wesentlichen senkrecht, zur vertikalen Richtung ausgerichtete Achse drehbar angeordnet.

Die Masse mindestens eines Strömungselements mindestens einer Strömungsführungsvorrichtung ist vorzugsweise so gewählt, dass das mindestens eine Strömungselement durch ein Einströmen des Rohgasstroms in eine Rohgaskammer mindestens einer Filtervorrichtung von dem Rohgasstrom aus einer geschlossenen Stellung in eine Offenstellung bringbar ist.

Ein durch die Masse (Eigengewicht) des mindestens einen Strömungselements resultierender Gegendruck hält sich dann vorzugsweise mit einem vom Rohgasstrom ausgeübten Druck in einem Gleichgewicht.

Der von dem Rohgasstrom auf mindestens ein Strömungselement mindestens einer Strömungsführungsvorrichtung aufgebrachte Druck ist vorzugsweise proportional zum Volumenstrom des Rohgasstroms.

In Abhängigkeit von dem Volumenstrom des Rohgasstroms ist vorzugsweise ein Querschnitt mindestens eines Einlasskanals mindestens einer Filtervorrichtung, insbesondere mittels mindestens eines variablen Strömungselements, vorzugsweise automatisch, einstellbar.

Insbesondere kann vorgesehen sein, dass in Abhängigkeit von dem Volumenstrom des Rohgasstroms ein Einströmwinkel des Rohgasstroms in mindestens eine Rohgaskammer mindestens einer Filtervorrichtung mittels mindestens eines variablen Strömungselements automatisch einstellbar ist. Auf diese Weise kann eine Anpassung der Menge an Filterhilfsmaterial, welche von dem Rohgasstrom aufgewirbelt und von dem Rohgasstrom aufgenommen wird, automatisch eingestellt werden.

Vorzugsweise sind mindestens zwei Strömungselemente mindestens einer Strömungsführungsvorrichtung vorgesehen, welche einander gegenüberliegende Begrenzungswände mindestens eines Einlasskanals mindestens einer Filtervorrichtung bilden. Auf diese Weise kann eine gezielte Beeinflussung des durch den Einlasskanal in die Rohgaskammer einströmenden Rohgasstroms erfolgen.

Insbesondere kann vorgesehen sein, dass mindestens zwei variable Strömungselemente vorgesehen sind, welche mindestens einen Einlasskanal mindestens einer Filtervorrichtung in der vertikalen Richtung begrenzen. Vorteilhaft kann es sein, wenn eine Relativposition von mindestens zwei Strömungselementen mindestens einer Strömungsführungsvorrichtung relativ zueinander einstellbar ist.

Insbesondere kann vorgesehen sein, dass mindestens ein Strömungselement relativ zu mindestens einem weiteren Strömungselement verschiebbar und/oder drehbar angeordnet ist.

Bei einer Ausgestaltung ist vorgesehen, dass mehrere in der Förderrichtung der Fördervorrichtung der Lackieranlage benachbart zueinander angeordnete Strömungselemente mindestens einer Strömungsführungsvorrichtung vorgesehen sind, welche getrennt voneinander einstellbar sind, so dass mindestens eine Strömungsführungsvorrichtung und somit eine Filtervorrichtung an unterschiedliche Rohgasströme mit längs der Förderrichtung variierenden Volumenströmen anpassbar sind. Auf diese Weise kann insbesondere gewährleistet werden, dass auch bei unterschiedlichen Volumenströmen stets zumindest eine gewünschte Mindestmenge von Filterhilfsmaterial beim Einströmen des Rohgasstroms in die Filtervorrichtung von demselben aufgenommen werden kann.

Ferner kann vorgesehen sein, dass mindestens ein Strömungselement mindestens einer Strömungsführungsvorrichtung in einer horizontalen Richtung verschiebbar angeordnet ist. Auf diese Weise kann der durch mindestens einen Einlasskanal mindestens einer Filtervorrichtung geführte Rohgasstrom gezielt unterschiedlichen Bereichen der Rohgaskammer, das heißt unterschiedlichen Bereichen eines Innenraums der Filtervorrichtung, in welchen im Filterbetrieb der Rohgasstrom vorhanden ist, insbesondere unterschiedlichen Bereichen des Filterhilfsmaterialaufnahmebehälters der Filtervorrichtung, zugeführt werden. Mindestens eine Strömungsführungsvorrichtung ist vorzugsweise so ausgebildet, dass ein Rohgasstrom mittels der Strömungsführungsvorrichtung so der Filtervorrichtung zuführbar ist, dass der Rohgasstrom oberhalb einer Behandlungsvorrichtung der Filtervorrichtung und/oder auf die Behandlungsvorrichtung gerichtet in die Rohgaskammer der Filtervorrichtung einströmt.

Bei einer weiteren Ausgestaltung kann vorgesehen sein, dass mindestens ein Strömungselement mindestens einer Strömungsführungsvorrichtung mittels einer Antriebsvorrichtung, beispielsweise mittels einer motorgesteuerten Antriebsvorrichtung, drehbar und/oder horizontal und/oder vertikal bewegbar ist.

Vorteilhaft kann es sein, wenn mittels mindestens einer Strömungsführungsvorrichtung in Abhängigkeit von einem Betriebsmodus mindestens einer Filtervorrichtung, beispielsweise einem Reinigungsbetrieb, in welchem mindestens eine Filtervorrichtung gereinigt wird, oder einem Gefahrenzustand, beispielsweise wenn Brandalarm ausgelöst wird, eine gezielte Einstellung einer Ausrichtung und/oder Positionierung mindestens eines Strömungselements automatisch durchführbar ist. Auf diese Weise kann mindestens ein Strömungselement als Sicherungsvorrichtung, beispielsweise als Brandschutzelement, dienen.

Bei einer Ausgestaltung ist vorgesehen, dass die Filterhilfsmaterialeinbringeinrichtung eine Steuervorrichtung umfasst, mittels welcher eine Einbringleistung der mindestens einen Filterhilfsmaterialeinbringeinrichtung steuerbar und/oder regelbar ist.

Unter der Einbringleistung der Filterhilfsmaterialeinbringeinrichtung ist in dieser Beschreibung und den beigefügten Ansprüchen ein Maß für die Menge an Filterhilfsmaterial zu verstehen, welche in einer vorgegebenen Zeit mittels der Filterhilfsmaterialeinbringeinrichtung in den Rohgasstrom einbringbar ist. Vorteilhaft kann es sein, wenn mittels der Steuervorrichtung die Einbringleistung der Filterhilfsmaterialeinbringeinrichtung so steuerbar und/oder regelbar ist, dass die Fähigkeit des in den Rohgasstrom eingebrachten Filterhilfsmaterials, Overspray-Partikel aus dem Rohgasstrom aufzunehmen, zumindest näherungsweise konstant ist.

Vorteilhaft kann es sein, wenn die Menge des eingebrachten Filterhilfsmaterials in Abhängigkeit von der spezifischen Aufnahmekapazität des Filterhilfsmaterials gesteuert und/oder geregelt wird. Die spezifische Aufnahmekapazität gibt dabei wieder, welche Menge an Lack-Overspray von einer vorgegebenen Menge an Filterhilfsmaterial aufgenommen werden kann. Die spezifische Aufnahmekapazität ändert sich somit in Abhängigkeit von einem Beladungszustand des Filterhilfsmaterials mit Lack-Overspray. Insbesondere lässt die spezifische Aufnahmekapazität mit zunehmender Betriebsdauer der Filtervorrichtung nach.

Alternativ oder ergänzend hierzu kann vorgesehen sein, dass mittels der Behandlungsvorrichtung die spezifische Aufnahmekapazität, beispielsweise über einen geregelten und/oder gesteuerten regelmäßigen Austausch des Filterhilfsmaterials und/oder über eine Steuerung und/oder Regelung eines Mischvorgangs und/oder eines Mahlvorgangs, gesteuert und/oder geregelt wird. Auf diese Weise kann insbesondere bei konstanter Einbringleistung der Filterhilfsmaterialeinbringeinrichtung die Fähigkeit des in den Rohgasstrom eingebrachten Filterhilfsmaterials, Overspray-Partikel aus dem Rohgasstrom aufzunehmen, zumindest näherungsweise konstant gehalten werden.

Ferner kann vorgesehen sein, dass eine Steuerung und/oder Regelung der Einbringleistung mittels der Steuervorrichtung in Abhängigkeit von dem Beladungszustand des Filterhilfsmaterials, von der Menge an Filterhilfsmaterial im Filterhilfsmaterialaufnahmebehälter, von der Masse des Filterhilfsmaterials im Filterhilfsmaterialaufnahmebehälter, von der Strömungsgeschwindigkeit des Rohgasstroms im Einlasskanal, von der Differenz zwischen dem Druck in der Rohgaskammer und in der Reingasleitung und/oder einem Verunreinigungsgrad des Rohgasstroms mit Overspray-Partikeln erfolgt.

Insbesondere kann vorgesehen sein, dass eine Einbringleistung der Filterhilfsmaterialeinbringeinrichtung über eine Einstellung mindestens eines Strömungselements steuerbar und/oder regelbar ist. Insbesondere kann hierzu vorgesehen sein, dass eine Position und/oder eine Winkelstellung mindestens eines Strömungselements hierzu angepasst, gesteuert und/oder geregelt wird.

Alternativ oder ergänzend hierzu kann ferner vorgesehen sein, dass mittels mindestens einer Behandlungsvorrichtung zur mechanischen Behandlung des Filterhilfsmaterials und/oder des Gemisches aus Filterhilfsmaterial und Overspray-Partikeln die Einbringleistung anpassbar, insbesondere steuerbar und/oder regelbar ist. Insbesondere kann hierbei vorgesehen sein, dass zur Steuerung und/oder Regelung der Einbringleistung eine Drehzahl von rotierenden (Behandlungs-)Elementen mindestens einer Behandlungsvorrichtung einstellbar, insbesondere steuerbar und/oder regelbar, ist.

Vorteilhaft kann es sein, wenn mindestens eine Filtervorrichtung der Filteranlage mindestens eine Strömungsführungsvorrichtung umfasst, welche in der Rohgaskammer der Filtervorrichtung angeordnet ist und mittels welcher der durch mindestens einen Einlasskanal der Filtervorrichtung in die Rohgaskammer strömende Rohgasstrom beeinflussbar ist. Auf diese Weise kann ein Rohgasstrom gezielt mindestens einem Filterelement mindestens einer Filtervorrichtung zugeführt werden, um ein vorteilhaftes Abtrennen von Overspray-Partikeln aus dem Rohgasstrom zu erhalten.

Mindestens eine Strömungsführungsvorrichtung umfasst hierzu vorzugsweise mindestens ein von Begrenzungswänden mindestens einer Filtervorrichtung verschiedenes Element, beispielsweise ein, insbesondere variables, Strömungselement.

Vorteilhaft kann es sein, wenn der durch mindestens einen Einlasskanal der Filtervorrichtung in die Rohgaskammer strömende Rohgasstrom mittels mindestens einer Strömungsführungsvorrichtung zu mindestens einem Filterelement mindestens einer Filtervorrichtung hin ablenkbar ist.

Ferner kann vorgesehen sein, dass mittels mindestens einer Strömungsführungsvorrichtung der durch mindestens einen Einlasskanal der Filtervorrichtung in die Rohgaskammer strömende Rohgasstrom verwirbelt werden kann. Auf diese Weise kann eine turbulente Strömung innerhalb der Rohgaskammer erhalten werden, wodurch eine bessere Vermischung der Overspray-Partikel und der Partikel des Filterhilfsmaterials und somit eine bessere Abtrennung der Overspray-Partikel aus dem Rohgasstrom erhalten werden kann.

Insbesondere dann, wenn mittels mindestens einer Strömungsführungsvorrichtung eine Verwirbelung des der Rohgaskammer zugeführten Rohgasstroms erzielt werden soll, kann vorgesehen sein, dass mindestens eine Strömungsführungsvorrichtung mindestens ein, beispielsweise als Diffusor ausgebildetes, Strömungselement umfasst. Insbesondere kann mindestens ein stabförmiges Strömungselement vorgesehen sein.

Ferner kann vorgesehen sein, dass mindestens eine Strömungsführungsvorrichtung mindestens ein beispielsweise als Leitblech ausgebildetes Strömungselement umfasst, mittels welchem Vorsprünge und/oder sonstige Stellen der Filtervorrichtung, welche eine bevorzugte Strömung des Rohgasstroms in der Rohgaskammer stören, überbrückt werden können.

Vorteilhaft kann es sein, wenn mindestens ein Strömungselement mindestens einer Strömungsführungsvorrichtung mit Öffnungen versehen ist, durch welche im Filterbetrieb der Filtervorrichtung Filterhilfsmaterial hindurchtreten kann. Auf diese Weise können eine Beaufschlagung sämtlicher Oberflächen, welche der Rohgaskammer zugewandt sind, mit Filterhilfsmaterial und ein zuverlässiger Schutz dieser Oberflächen vor einer unerwünschten Verunreinigung mit Lack-Overspray erzielt werden.

Vorteilhafterweise kann ferner vorgesehen sein, dass mindestens ein als Leitblech ausgebildetes Strömungselement eine Mehrzahl von Öffnungen aufweist und/oder vorzugsweise als Diffusor dient.

Unter einem Diffusor ist in dieser Beschreibung und den beigefügten Ansprüchen insbesondere ein Element zu verstehen, welches eine Verwirbelung von daran entlanggeführten Strömen begünstigt. Insbesondere kann hierunter ein Element zu verstehen sein, mittels welchem eine laminare Strömung verwirbelt werden kann, so dass eine turbulente Strömung erzeugt wird.

Bei einer Ausgestaltung ist vorgesehen, dass mindestens ein Strömungselement mindestens einer Strömungsführungsvorrichtung in einem Laminarbereich der Rohgaskammer, in welchem im Filterbetrieb der Filtervorrichtung eine im Wesentlichen laminare Strömung herrscht, angeordnet, insbesondere befestigt, ist und/oder sich in einen Turbulenzbereich der Rohgaskammer der Filtervorrichtung erstreckt, in welchem im Filterbetrieb der Filtervorrichtung eine turbulente Strömung herrscht oder erzeugt werden soll. Die Verwendung von mindestens einem Strömungselement mindestens einer Strömungsführungsvorrichtung kann insbesondere den Vorteil bieten, dass mindestens ein Filterelement mindestens einer Filtervorrichtung im Wesentlichen gleichmäßig mit dem Overspray-Partikel enthaltenden Rohgasstrom angeströmt werden kann. Ferner können hierdurch unerwünschte Ablagerungen von Filterhilfsmaterial innerhalb der Rohgaskammer verringert, insbesondere ganz vermieden, werden.

Bei einer Ausgestaltung ist vorgesehen, dass die Lackieranlage, insbesondere die Filteranlage der Lackieranlage, eine Konditioniervorrichtung umfasst, welche eine Kühlvorrichtung, eine Befeuchtungsvorrichtung und/oder eine Tropfenabscheidungsvorrichtung umfasst. Ferner umfasst die Konditioniervorrichtung vorzugsweise ein, insbesondere gemeinsames, Flüssigkeitshandhabungssystem für die Kühlvorrichtung, die Befeuchtungsvorrichtung und/oder die Tropfenabscheidungsvorrichtung. Hierdurch kann ein durch die Konditioniervorrichtung geführter Gasstrom besonders effizient gekühlt und/oder befeuchtet werden. Ferner können hierdurch in dem Gasstrom befindliche Tropfen einfach abgeschieden werden.

Es kann vorgesehen sein, dass die Konditioniervorrichtung eine Kühlvorrichtung und eine Befeuchtungsvorrichtung umfasst, wobei die Befeuchtungsvorrichtung bezüglich einer Durchströmungsrichtung der Konditioniervorrichtung stromabwärts der Kühlvorrichtung angeordnet ist.

Ferner kann vorgesehen sein, dass die Konditioniervorrichtung eine Kühlvorrichtung und eine Tropfenabscheidungsvorrichtung umfasst, wobei vorzugsweise die Tropfenabscheidungsvorrichtung bezüglich der Durchströmungsrichtung der Konditioniervorrichtung stromabwärts der Kühlvorrichtung angeordnet ist.

Günstig kann es sein, wenn die Konditioniervorrichtung eine Heizvorrichtung umfasst. Eine solche Heizvorrichtung kann beispielsweise bezüglich der Durchströmungsrichtung der Konditioniervorrichtung stromabwärts der Kühlvorrichtung und/oder stromaufwärts der Befeuchtungsvorrichtung angeordnet sein.

Günstig kann es ferner sein, wenn die Konditioniervorrichtung mindestens zwei Tropfenabscheidungsvorrichtungen umfasst, wobei vorzugsweise eine Tropfenabscheidungsvorrichtung bezüglich der Durchströmungsrichtung der Konditioniervorrichtung stromaufwärts einer Befeuchtungsvorrichtung und eine weitere Tropfenabscheidungsvorrichtung stromabwärts der Befeuchtungsvorrichtung angeordnet ist.

Bei einer Ausgestaltung ist vorgesehen, dass die Konditioniervorrichtung ein Flüssigkeitshandhabungssystem umfasst, mittels welchem Kondensat, das sich an der Kühlvorrichtung bildet, und/oder nicht von dem Gasstrom aufgenommene Flüssigkeit, die von der Befeuchtungsvorrichtung abgegeben wird, aufnehmbar sind.

Insbesondere kann vorgesehen sein, dass das Flüssigkeitshandhabungssystem eine Auffangwanne umfasst, welche vorzugsweise unter der Kühlvorrichtung, unter der Befeuchtungsvorrichtung und/oder unter der Tropfenabscheidungsvorrichtung angeordnet ist. Vorzugsweise umfasst das Flüssigkeitshandhabungssystem eine gemeinsame Auffangwanne für die Kühlvorrichtung, die Befeuchtungsvorrichtung und/oder die Tropfenabscheidungsvorrichtung, so dass im Wesentlichen die gesamte in der Konditioniervorrichtung anfallende, nicht vom Gasstrom aufgenommene Flüssigkeit in der gemeinsamen Auffangwanne auffangbar ist.

Günstig kann es sein, wenn mittels der Befeuchtungsvorrichtung die Kühlvorrichtung mit Flüssigkeit beaufschlagbar, insbesondere besprühbar, ist. Hierdurch kann zur Erhöhung der Effizienz der Befeuchtung die von dem Gasstrom überströmte Oberfläche der Kühlvorrichtung mit Flüssigkeit benetzt werden. Die Kühlvorrichtung kann hierdurch als Zusatz oder Ersatz für einen Phasengrenzflächenlieferanten dienen.

Mittels eines Phasengrenzflächenlieferanten kann insbesondere zur Befeuchtung ein Stoffübergang von einer flüssigen Phase in die Dampfphase erleichtert werden. Insbesondere kann hierbei eine Oberfläche der Flüssigkeit vergrößert werden.

Beispielsweise kann vorgesehen sein, dass ein Phasengrenzflächenlieferant, beispielsweise die Kühlvorrichtung, durch ein Gestrick mit einer großen Oberfläche, beispielsweise ein Drahtgestrick, gebildet ist, welches mit Flüssigkeit beaufschlagt, insbesondere überströmt oder besprüht, wird. Alternativ oder ergänzend hierzu kann vorgesehen sein, dass ein Füllkörper, beispielsweise aus Aktivkohle, mit Flüssigkeit beaufschlagt, insbesondere überströmt oder besprüht, wird und zugleich mit dem Gasstrom durchströmt wird, um eine möglichst große Flüssigkeitsoberfläche mit dem Gasstrom in Kontakt zu bringen.

Ein Phasengrenzflächenlieferant kann ferner den Vorteil bieten, dass Tropfen in dem Gasstrom abgeschieden werden. Ein Phasengrenzflächenlieferant kann somit auch als Tropfenabscheidungsvorrichtung dienen.

Vorteilhaft kann es sein, wenn die Kühlvorrichtung zugleich als eine Tropfenabscheidungsvorrichtung dient.

Ferner kann vorgesehen sein, dass die Kühlvorrichtung als eine Vergleichmäßigungsvorrichtung zum Vergleichmäßigen des Gasstroms in der Konditioniervorrichtung dient. Eine solche Vergleichmäßigungsvorrichtung kann auch als Gleichrichter bezeichnet werden.

Vorzugsweise sind somit die Funktionen eines Phasengrenzflächenlieferanten und/oder eines Gleichrichters in die Kühlvorrichtung integriert.

Eine solche Konditioniervorrichtung kann den Vorteil bieten, dass ein beim Durchströmen der Konditioniervorrichtung mit dem Gasstrom entstehender Druckverlust reduziert wird.

Ferner kann eine solche Konditioniervorrichtung einen kompakten Aufbau aufweisen, wodurch ein Platzbedarf reduziert wird.

Die Anzahl der Bauteile der Konditioniervorrichtung kann hierdurch reduziert werden.

Ferner ist ein (nicht erfindungsgemässes) Verfahren zum Betrieb einer Lackieranlage beschrieben, welches ein zuverlässiges Abtrennen von Lack-Overspray aus einem mit Lack-Overspray beladenen Rohgasstrom ermöglicht.

Es zeichnet sich dadurch aus, dass folgende Verfahrensschritte durchgeführt werden:
- Fördern der Werkstücke in einer Förderrichtung durch die Lackierkabine mittels einer Fördervorrichtung und Lackieren der Werkstücke in der Lackierkabine;
- Zuführen eines Rohgasstroms aus der Lackierkabine der Lackieranlage, welcher Lack-Overspray in der Lackierkabine aufgenommen hat, zu einer Filteranlage;
- Abtrennen von Lack-Overspray aus dem mit Overspray-Partikeln beladenen Rohgasstrom mittels mindestens einer Filtervorrichtung der Filteranlage, so dass ein Reingasstrom erhalten wird.

Das Verfahren weist vorzugsweise die vorstehend im Zusammenhang mit der erfindungsgemäßen Lackieranlage beschriebenen Merkmale und/oder Vorteile auf.

Vorteilhaft kann es sein, wenn der Reingasstrom mittels mindestens einer Reingasleitung abgeführt wird, welche zumindest abschnittsweise innerhalb einer Außenkontur mindestens einer Filtervorrichtung angeordnet ist.

Vorteilhaft kann es sein, wenn mittels mindestens einer Filterhilfsmaterialeinbringeinrichtung, insbesondere mittels einer Behandlungsvorrichtung zum mechanischen Behandeln von Filterhilfsmaterial und/oder eines Gemisches aus Filterhilfsmaterial und Overspray-Partikeln, Filterhilfsmaterial und/oder ein Gemisch aus Filterhilfsmaterial und Overspray-Partikeln aufgelockert wird.

Günstig kann es sein, wenn zumindest ein Teil des Rohgasstroms in mindestens einen Filterhilfsmaterialaufnahmebehälter mindestens einer Filtervorrichtung eingeleitet wird.

Ferner kann es günstig sein, wenn das aufgelockerte Filterhilfsmaterial und/oder das aufgelockerte Gemisch aus Filterhilfsmaterial und Overspray-Partikeln von dem Rohgasstrom mitgerissen wird und sich hierdurch mit dem Rohgas des Rohgasstroms vermischt.

Insbesondere dann, wenn eine Beaufschlagung des Rohgases aus dem Rohgasstrom mit Filterhilfsmaterial und/oder mit einem Gemisch aus Filterhilfsmaterial und Overspray-Partikeln bereits durch das Einleiten des Rohgasstroms in den mindestens einen Filterhilfsmaterialaufnahmebehälter der mindestens einen Filtervorrichtung erfolgt, kann auf Druckluftstöße mittels mindestens einer Druckluftvorrichtung oder ähnliche Vorrichtungen zum Aufwirbeln des Filterhilfsmaterials verzichtet werden.

Insbesondere kann vorgesehen sein, dass der Reingasstrom unter einem Rohgasschacht der Lackieranlage hindurch geführt wird. Auf diese Weise sind eine besonders vorteilhafte Gasstromführung innerhalb der Filteranlage und eine kompakte Ausgestaltung der Filteranlage möglich.

Ferner ist ein (nicht erfindungsgemässes) Verfahren zum Betrieb einer Lackieranlage beschrieben, welches folgende Verfahrensschritte umfasst:
- Fördern der Werkstücke in einer Förderrichtung durch die Lackierkabine mittels einer Fördervorrichtung und Lackieren der Werkstücke in der Lackierkabine;
- Zuführen eines Rohgasstroms aus der Lackierkabine der Lackieranlage, welcher Lack-Overspray in der Lackierkabine aufgenommen hat, zu einer Filteranlage;
- Abtrennen von Lack-Overspray aus dem mit Overspray-Partikeln beladenen Rohgasstrom mittels mindestens einer Filtervorrichtung der Filteranlage, so dass ein Reingasstrom erhalten wird.

Dadurch gelingt es, ein Verfahren bereitzustellen, mittels welchem Lack-Overspray aus einem mit Lack-Overspray beladenen Rohgasstrom zuverlässig abgetrennt werden kann.

Umgesetzt wird dies dadurch, dass der Rohgasstrom über mindestens einen Einlasskanal mindestens einer Filtervorrichtung in eine Rohgaskammer der mindestens einen Filtervorrichtung geführt wird, wobei dem Rohgasstrom mittels mindestens einer Filterhilfsmaterialeinbringeinrichtung Filterhilfsmaterial zugeführt wird.

Das Verfahren kann vorzugsweise die vorstehend im Zusammenhang mit der erfindungsgemäßen Lackieranlage und/oder dem zuvor beschriebenen Verfahren beschriebenen Merkmale und/oder Vorteile aufweisen.

Insbesondere kann vorgesehen sein, dass mittels der Filterhilfsmaterialeinbringeinrichtung Filterhilfsmaterial aufgewirbelt, durchmischt, gefördert und/oder zermahlen wird.

Ferner können die beschriebenen Lackieranlagen und/oder die beschriebenen Verfahren die nachfolgend beschriebenen Merkmale und/oder Vorteile aufweisen:
Vorteilhaft kann es sein, wenn die Lackieranlage mindestens eine Filterhilfsmaterialeinbringeinrichtung umfasst, welche als eine Dosiereinrichtung zur gezielten Zufuhr von Filterhilfsmaterial, welches auch als Precoat-Material bezeichnet wird, zu einem mit Overspray-Partikeln beladenen Rohgasstrom ausgebildet ist.

Die Filteranlage der Lackieranlage umfasst vorzugsweise mindestens eine Reingaskammer, welche mittels mindestens eines Filterelements mindestens einer Filtervorrichtung von mindestens einer Rohgaskammer getrennt ist, wobei im Filterbetrieb der Filtervorrichtung in der mindestens einen Reingaskammer ein gereinigter Gasstrom und in der Rohgaskammer ein mit Overspray-Partikeln beladener Gasstrom vorhanden ist.

Die Lackieranlage weist vorzugsweise mindestens ein Gasrückführungssystem, beispielsweise eine Umluftführungsvorrichtung, auf, mittels welcher der durch Reinigung des Rohgasstroms erhaltene Reingasstrom zumindest teilweise erneut der Lackierkabine zuführbar ist.

Die Lackieranlage umfasst vorzugsweise mindestens eine Reingasleitung, welche zumindest abschnittsweise benachbart zu mindestens einer Filtervorrichtung angeordnet und/oder zumindest abschnittsweise im Wesentlichen vertikal ausgerichtet ist. Vorzugsweise ist mittels mindestens einer Reingasleitung das Reingas benachbart zu der mindestens einen Filtervorrichtung zumindest abschnittsweise im Wesentlichen vertikal nach unten führbar. Ferner kann vorgesehen sein, dass die Lackieranlage mindestens eine Reingasleitung umfasst, welche unterhalb des (Rohgas-)Schachts hindurch führt und somit die Führung des Reingasstroms von der bezüglich einer vertikalen Längsmittelebene der Lackierkabine einen Seite auf die dieser Seite gegenüberliegende Seite ermöglicht.

Vorteilhafterweise kann der Rohgasstrom unter einem spitzen Winkel zur Horizontalen in mindestens eine Rohgaskammer mindestens einer Filtervorrichtung geleitet, insbesondere eingeströmt, werden. Vorteilhaft kann es dabei sein, wenn mindestens ein, insbesondere beweglich ausgebildetes, Leitelement (Strömungselement) gesteuert und/oder geregelt werden kann, um die mittlere Strömungsrichtung des Rohgasstroms im Rohgasschacht asymmetrisch zu der Längsmittelebene der Lackierkabine und/oder der Längsmittelebene der Filteranlage (des Luftreinigungssystems) umzulenken und, vorzugsweise beschleunigt, der Rohgaskammer zuzuführen. Insbesondere kann vorgesehen sein, dass die mittlere Strömungsrichtung des Rohgasstroms in einem Eintrittsabschnitt des Rohgasschachts am oberen Ende des Rohgasschachts quer zu der mittleren Strömungsrichtung des Rohgasstroms in einem Einlasskanal der Filtervorrichtung ist. Die mittlere Strömungsrichtung des Rohgasstroms im Einlasskanal der Filtervorrichtung verläuft ferner vorzugsweise quer zur vertikalen Längsmittelebene der Lackierkabine.

Vorteilhaft kann es sein, wenn in mindestens einer Rohgaskammer mindestens einer Filtervorrichtung der Filteranlage mithilfe des Rohgasstroms und/oder mithilfe einer Behandlungsvorrichtung, beispielsweise einer rotierenden Mischeinheit (Paddelmischer, Schneckenmischer), Filterhilfsmaterial, welches beispielsweise in einem als Wanne ausgebildeten Filterhilfsmaterialaufnahmebehälter angeordnet ist, aufgewirbelt und dem Rohgasstrom zugeführt (zudosiert) werden kann. Der auf diese Weise mit Filterhilfsmaterial beladene Rohgasstrom wird vorzugsweise umgelenkt und mit einer vertikal nach oben gerichteten Strömungskomponente mindestens einem Filterelement mindestens einer Filtervorrichtung zugeführt.

Vorteilhaft kann es sein, wenn die unter dem Rohgasschacht hindurch führende Reingasleitung im Wesentlichen quer zur Förderrichtung der Fördervorrichtung der Lackieranlage verläuft und in einen Reingassammelkanal mündet, welcher ebenfalls Bestandteil des Gasrückführungssystems, insbesondere der Umluftführungsvorrichtung, ist und aus welchem Reingas für die Zufuhr zu der Lackierkabine entnommen werden kann.

Die beispielsweise als Mischeinheit ausgebildete Filterhilfsmaterialeinbringeinrichtung weist vorzugsweise eine im Wesentlichen horizontal ausgerichtete Rotationsachse auf, um welche mindestens ein Behandlungselement rotieren kann, und ermöglicht die Förderung von Filterhilfsmaterial in einer im Wesentlichen parallel zur Förderrichtung der Fördervorrichtung der Lackieranlage ausgerichteten Richtung. Hierbei kann vorgesehen sein, dass eine Zufuhr des Rohgasstroms in einer quer zur Rotationsachse der Filterhilfsmaterialeinbringeinrichtung verlaufenden Richtung, insbesondere im Wesentlichen senkrecht hierzu, erfolgt und dass die unter dem Rohgasschacht hindurch führende Reingasleitung zumindest teilweise auch unterhalb, insbesondere unter, der Filtervorrichtung und/oder unterhalb, insbesondere unter, der Filterhilfsmaterialeinbringeinrichtung verläuft.

Die Filteranlage der Lackieranlage ermöglicht vorzugsweise einen Druckaufbau mittels mindestens eines Ventilators innerhalb eines Filtermoduls. Insbesondere dann, wenn mindestens eine Filterhilfsmaterialeinbringeinrichtung als Behandlungsvorrichtung ausgebildet ist, kann vorgesehen sein, dass mittels mindestens eines Behandlungselements der Behandlungsvorrichtung ein benachbart zu der Filterhilfsmaterialeinbringeinrichtung angeordneter Auslass zum Entfernen von Filterhilfsmaterial aus der Filtervorrichtung mittels des mindestens einen Behandlungselements freigeräumt werden kann, so dass sich dieser nicht zusetzen kann und die Abfuhr von, insbesondere stark mit Overspray-Partikeln beladenem, Filterhilfsmaterial nicht verhindert.

Bei einer Ausgestaltung kann vorgesehen sein, dass mindestens eine Filterhilfsmaterialeinbringeinrichtung mindestens eine Mahlkugel und/oder mindestens eine Mahlplatte umfasst, mittels welcher insbesondere Agglomerate von Filterhilfsmaterial und Overspray-Partikeln aufgebrochen werden können.

Vorteilhaft kann es sein, wenn ein Auslass in der Filtervorrichtung zum Entfernen von Filterhilfsmaterial aus der Filtervorrichtung mit einer Sicherungsvorrichtung versehen ist, beispielsweise mit kreuzförmig angeordneten Stegen versehen ist, um ein Verstopfen des Auslasses mit großen Agglomeraten aus Filterhilfsmaterial und Overspray-Partikeln zu verhindern.

Bei einer Ausgestaltung ist vorgesehen, dass mindestens eine Behandlungsvorrichtung verschiedenartige Behandlungselemente, beispielsweise Auflockerungselemente, Förderelemente, Mahlelemente und/oder Mischelemente, umfasst.

Insbesondere kann vorgesehen sein, dass mindestens ein Behandlungselement mindestens einer Behandlungsvorrichtung ein vorgegebenes Volumen zumindest fünfseitig umgibt und darin im Behandlungsbetrieb Filterhilfsmaterial aufnehmbar ist, so dass im Behandlungsbetrieb der Behandlungsvorrichtung, in welchem Filterhilfsmaterial beispielsweise aufgewirbelt werden kann, eine gewisse Menge Filterhilfsmaterial von dem mindestens einen Behandlungselement erfasst werden kann, ohne dass dieses Filterhilfsmaterial sofort wieder von dem mindestens einen Behandlungselement abrutscht. Mindestens eine Behandlungsvorrichtung umfasst vorzugsweise ein Mahlwerk, einen Mahlstein und/oder Mahlkugeln, welche beispielsweise aus Keramik gebildet sind.

Bei einer Ausgestaltung einer Behandlungsvorrichtung ist vorgesehen, dass mindestens eine Mahlkugel als eine frei rollende Kugel aus einem Material hoher Dichte, beispielsweise aus einem metallischen Material, insbesondere aus Stahl, ausgebildet ist.

Vorteilhaft kann es sein, wenn mindestens eine Behandlungsvorrichtung ein Mahlwerk mit aufeinander reibenden Mahlsteinen umfasst.

Ferner kann es vorteilhaft sein, wenn mindestens eine Behandlungsvorrichtung eine rotierende Förderschnecke umfasst.

Bei einer Ausgestaltung kann vorgesehen sein, dass das Gewicht oder die Masse des in dem Filterhilfsmaterialaufnahmebehälter angeordneten Filterhilfsmaterials oder des in dem Filterhilfsmaterialaufnahmebehälter angeordneten Gemisches aus Filterhilfsmaterial und Lack-Overspray mittels einer Waage ermittelt wird.

Dabei kann die Waage insbesondere an einen unteren Abschnitt des Filterhilfsmaterialaufnahmebehälters, welcher mechanisch von einem oberen Abschnitt des Filterhilfsmaterialaufnahmebehälters entkoppelt ist, angekoppelt sein.

Ferner wird vorzugsweise mittels der Waage das Gewicht oder die Masse des unteren Abschnitts des Filterhilfsmaterialaufnahmebehälters und des darin enthaltenen Materials ermittelt.

Um die Brauchbarkeit des in dem Filterhilfsmaterialaufnahmebehälter enthaltenen Materials zur Reinigung des Rohgasstroms beurteilen zu können, kann vorgesehen sein, dass Material aus dem Filterhilfsmaterialaufnahmebehälter in mindestens einer Aufwirbelphase aufgelockert und/oder aufgewirbelt wird und durch einen Vergleich des Gewichts oder der Masse des in dem Filterhilfsmaterialaufnahmebehälter vor der Aufwirbelphase und nach der Aufwirbelphase enthaltenen Materials eine Reinigungskapazität oder Wirksamkeit des im Filterhilfsmaterialaufnahmebehälter enthaltenen Materials ermittelt wird. Insbesondere kann hierdurch ermittelt werden, welche Menge an Filterhilfsmaterial während der Aufwirbelphase an mindestens einem Filterelement der Filtervorrichtung anhaftet, um daran eine Schutzschicht auszubilden.

Die Wirksamkeit (spezifische Aufnahmekapazität) ist ein Maß für die Fähigkeit des Filterhilfsmaterials, am Filterelement anzuhaften und Lack-Overspray binden zu können.

Eine solche Wirksamkeit kann insbesondere als Quotient aus der Abnahme des Gewichts oder der Masse des in dem Filterhilfsmaterialaufnahmebehälter enthaltenen Materials durch das Aufwirbeln einerseits und der Nettoaufwirbelzeit andererseits ermittelt werden.

Zur genaueren Ermittlung der Wirksamkeit kann vorgesehen sein, dass ein Aufwirbelzyklus mit mehreren, durch Aufwirbelpausen voneinander getrennten Aufwirbelphasen durchgeführt wird und das Gewicht oder die Masse des in dem Filterhilfsmaterialaufnahmebehälter vor der ersten Aufwirbelphase des Aufwirbelzyklus und nach der letzten Aufwirbelphase des Aufwirbelzyklus jeweils enthaltenen Materials zur Ermittlung der Wirksamkeit verglichen wird. Je größer der Wert für diese Wirksamkeit ist, umso besser ist das Material aus dem Filterhilfsmaterialaufnahmebehälter zur Ausbildung einer Schutzschicht an dem mindestens einen Filterelement geeignet.

Es ist daher günstig, wenn Material aus dem Filterhilfsmaterialaufnahmebehälter entnommen wird, wenn die ermittelte Wirksamkeit und/oder die Gewichts- oder Massendifferenz einen vorgegebenen Mindestwert unterschreitet.

Das entnommene Material, insbesondere ein Gemisch aus Filterhilfsmaterial und Lack-Overspray, wird dann vorzugsweise durch frisches Filterhilfsmaterial, welches nicht oder nur in geringem Umfang mit Lack-Overspray beladen ist, ersetzt.

Bei einer bevorzugten Ausgestaltung kann vorgesehen sein, dass mittels einer Waage eine Amplitude einer Gewichtskurve ermittelt wird, welche den zeitlichen Verlauf des Gesamtgewichts des in dem Filterhilfsmaterialaufnahmebehälter angeordneten Gemisches aus Filterhilfsmaterial und Overspray-Partikeln wiedergibt.

Beispielsweise bei Unterschreiten und/oder Überschreiten eines vorgegebenen Grenzwertes kann vorgesehen sein, dass zumindest ein Teil des Gemisches aus Filterhilfsmaterial und Overspray-Partikeln aus dem Filterhilfsmaterialaufnahmebehälter entfernt und durch frisches, nicht oder nur in geringem Umfang mit Overspray-Partikeln beladenes Filterhilfsmaterial ersetzt wird.

Auf diese Weise kann eine hohe Wirksamkeit des Filterhilfsmaterials über einen langen Zeitraum aufrecht erhalten werden.

Insbesondere mittels mindestens einer Filterhilfsmaterialeinbringeinrichtung kann eine Dauer-Precoatierung, das heißt ein kontinuierliches Einbringen von Filterhilfsmaterial in den Rohgasstrom im Filterbetrieb mindestens einer Filtervorrichtung, realisiert werden.

Vorzugsweise ist eine Druckluftvorrichtung zum Durchmischen, Auflockern und/oder Aufwirbeln von Filterhilfsmaterial entbehrlich.

Bei einer alternativen Ausführungsform oder ergänzend zu einer wie vorstehend beschriebenen Filterhilfsmaterialeinbringeinrichtung kann eine Druckluftvorrichtung zum Durchmischen, Auflockern und/oder Aufwirbeln von Filterhilfsmaterial vorgesehen sein.

Vorzugsweise erfolgt eine kontinuierliche Beimischung von Filterhilfsmaterial in den Rohgasstrom aus einem Vorlagebehälter (Filterhilfsmaterialaufnahmebehälter). Hierdurch ergibt sich ein (kurzfristiger) kontinuierlicher Masseverlust zwischen zwei Abreinigungsvorgängen an den Filterkerzen (Filterelementen). Mittelfristig ergibt sich ein Anstieg der Masse von Filterhilfsmaterial und Overspray-Partikeln im Filterhilfsmaterialaufnahmebehälter und ab einem bestimmten Zeitpunkt auch wieder eine Abnahme. Die Masse an Filterhilfsmaterial und Overspray-Partikeln im Filterhilfsmaterialaufnahmebehälter wird hierfür vorzugsweise kontinuierlich überwacht. Insbesondere in festen Zeitintervallen wird die Entwicklung der Masse an Filterhilfsmaterial und Overspray-Partikeln im Filterhilfsmaterialaufnahmebehälter mit einem Referenzwert verglichen, beispielsweise einem Referenzwert für unverbrauchtes Filterhilfsmaterial, das heißt nicht mit Lack-Overspray-Partikeln verunreinigtes Filterhilfsmaterial.

Vorzugsweise kann ermittelt werden, ob ein in dem Filterhilfsmaterialaufnahmebehälter angeordnetes Gemisch aus Filterhilfsmaterial und Lack-Overspray fluidisierfähig ist. Hierzu kann beispielsweise die zeitliche Entwicklung der im Filterhilfsmaterialaufnahmebehälter vorhandenen Gesamtmasse an Filterhilfsmaterial und Lack-Overspray ermittelt und mit Referenzwerten verglichen werden, wobei insbesondere eine innerhalb eines Abreinigungs- und Aufwirbelungszyklus auftretende Massenveränderung im Filterhilfsmaterialaufnahmebehälter detektierbar sein muss, um auf die Fluidisierfähigkeit des Gemisches aus Filterhilfsmaterial und Lack-Overspray schließen zu können. Eine zu geringe Massendifferenz im Laufe eines solchen Zyklus lässt darauf schließen, dass nicht die für den zuverlässigen Filterbetrieb der Filtervorrichtung notwendige Menge von Filterhilfsmaterial fluidisierfähig ist.

Mittels mindestens einer Behandlungsvorrichtung kann das in dem Filterhilfsmaterialaufnahmebehälter angeordnete Filterhilfsmaterial oder das in dem Filterhilfsmaterialaufnahmebehälter angeordnete Gemisch aus Filterhilfsmaterial und Overspray-Partikeln in einem gelockerten Zustand gehalten werden, beispielsweise fluidisiert werden, so dass das Filterhilfsmaterial oder das Gemisch aus Filterhilfsmaterial und Overspray-Partikeln besonders einfach aufgewirbelt und dem Rohgasstrom zugeführt werden kann.

Ferner kann mittels mindestens einer Behandlungsvorrichtung das im Filterhilfsmaterialaufnahmebehälter angeordnete Filterhilfsmaterial oder das in dem Filterhilfsmaterialaufnahmebehälter angeordnete Gemisch aus Filterhilfsmaterial und Overspray-Partikeln, insbesondere kontinuierlich, aufgeworfen werden, so dass dieses besonders einfach von dem Rohgasstrom mitgerissen wird und somit von dem Rohgasstrom aufgenommen werden kann.

Zum Antreiben mindestens einer Behandlungsvorrichtung kann beispielsweise ein Elektromotor vorgesehen sein. Auf diese Weise kann insbesondere eine Steuerung und/oder Regelung einer Drehzahl eines rotierenden (Behandlungs-) Elements mindestens einer Behandlungsvorrichtung besonders einfach erfolgen.

Durch eine Steuerung und/oder Regelung einer Drehzahl (Frequenz) mindestens einer Behandlungsvorrichtung kann insbesondere eine Einbringleistung beeinflusst werden.

Mindestens eine Strömungsführungsvorrichtung und/oder mindestens ein Einlasskanal mindestens einer Filtervorrichtung ist vorzugsweise so angeordnet, dass ein in die Rohgaskammer geführter Rohgasstrom im Bereich der Behandlungsvorrichtung, insbesondere knapp oberhalb der Behandlungsvorrichtung, in die Rohgaskammer einströmt, so dass bereits eine geringe Wurfhöhe der Behandlungsvorrichtung ausreicht, um dem Rohgasstrom Filterhilfsmaterial zuzuführen, das heißt, dass bereits dann, wenn mittels der mindestens einen Behandlungsvorrichtung das in dem Filterhilfsmaterialaufnahmebehälter angeordnete Material über eine geringe Distanz vertikal nach oben befördert wird, das Filterhilfsmaterial oder das Gemisch aus Filterhilfsmaterial und Overspray-Partikeln von dem Rohgasstrom aufgenommen werden kann.

Insbesondere dann, wenn mindestens eine Behandlungsvorrichtung eine Mahlvorrichtung zum Zermahlen des in dem Filterhilfsmaterialaufnahmebehälter angeordneten Materials (Filterhilfsmaterial oder ein Gemisch aus Filterhilfsmaterial und Overspray-Partikeln) umfasst, können Agglomerate aus Overspray-Partikeln und Filterhilfsmaterial besonders einfach wieder zerrieben werden, so dass eine konstante Korngrößenverteilung gewährleistet werden kann.

Alternativ oder ergänzend hierzu kann vorgesehen sein, dass mindestens eine Filterhilfsmaterialeinbringeinrichtung eine Schallvorrichtung, beispielsweise eine Ultraschallvorrichtung, umfasst, mittels welcher das Gemisch aus Overspray-Partikeln und Filterhilfsmaterial mit Schall beaufschlagbar ist, so dass Agglomerate aus Overspray-Partikeln und Filterhilfsmaterial zerkleinert werden können.

Mindestens ein Behandlungselement mindestens einer Behandlungsvorrichtung umfasst vorzugsweise ein metallisches Material oder ist vorzugsweise aus einem metallischen Material gebildet, um den Abrieb im Dauerbetrieb zu minimieren. Alternativ oder ergänzend hierzu kann jedoch auch vorgesehen sein, das mindestens ein Behandlungselement mindestens einer Behandlungsvorrichtung ein Kunststoffmaterial, beispielsweise ein faserverstärktes Kunststoffmaterial, und/oder ein Keramikmaterial umfasst oder aus einem Kunststoffmaterial, beispielsweise aus faserverstärktem Kunststoff, oder aus einem Keramikmaterial gebildet ist.

Insbesondere dann, wenn nichtmetallische Werkstoffe für die Behandlungselemente mindestens einer Behandlungsvorrichtung gewählt werden, können höhere Rotationsgeschwindigkeiten erzielt werden, ohne dass eine Funkenbildung zu befürchten ist.

Vorteilhaft kann es sein, wenn mindestens eine Filterhilfsmaterialeinbringeinrichtung mittels einer beispielsweise als Grobabscheider, insbesondere als Gitter, als Magnetmatrix oder als Kamm, ausgebildeten Sicherungsvorrichtung versehen ist, um versehentlich in die Filtervorrichtung eingesaugte Gegenstände, insbesondere metallische Gegenstände, aufzufangen. Insbesondere kann hierdurch eine Behandlungsvorrichtung vor einer Beschädigung geschützt werden.

Insbesondere dann, wenn die Wirksamkeit (spezifische Aufnahmekapazität) des in dem Filterhilfsmaterialaufnahmebehälter angeordneten Gemisches aus Filterhilfsmaterial und Overspray-Partikeln im Verlauf eines Filterbetriebs der mindestens einen Filtervorrichtung nachlässt, kann vorgesehen sein, dass eine Teilentleerung des mindestens einen Filterhilfsmaterialaufnahmebehälters durchgeführt wird und sehr feines Filterhilfsmaterial zugeführt wird. Beispielsweise wird Filterhilfsmaterial mit einer Korngrößenverteilung zugeführt, welche einen Median D₅₀ von ungefähr 1 µm bis ungefähr 10 µm aufweist, das heißt, dass 50 % der Teilchen größer und 50 % der Teilchen kleiner als der vorgegebene Wert zwischen ungefähr 1 µm und ungefähr 10 µm sind.

Ferner kann vorgesehen sein, das Material aus einem Silo, in welchem aus dem Filterhilfsmaterialaufnahmebehälter abgeführtes, mit Overspray-Partikeln beladenes Filterhilfsmaterial gelagert werden kann, mit frischem, nicht mit Overspray-Partikeln beladenem Filterhilfsmaterial vermischt und erneut dem Filterhilfsmaterialaufnahmebehälter zugeführt wird. Hierbei kann ferner vorgesehen sein, dass das Gemisch aus frischem Filterhilfsmaterial und mit Overspray-Partikeln beladenem Filterhilfsmaterial aufbereitet, beispielsweise zermahlen, wird, bevor es dem Filterhilfsmaterialaufnahmebehälter zugeführt wird.

Bei der beschriebenen Lackieranlage und/oder bei dem erfindungsgemäßen Verfahren kann vorgesehen sein, dass eine Filterfläche mindestens einer Filtervorrichtung durch die Hinzufügung weiterer Filterelemente erweitert wird, so dass vorzugsweise lediglich eine sich längs der Förderrichtung der Fördervorrichtung der Lackieranlage erstreckende Reihe von Filtervorrichtungen vorgesehen ist und dieser Reihe von Filtervorrichtungen die gesamte aus der Lackierkabine stammende Luft, das heißt der gesamte Rohgasstrom, zugeführt wird.

Die Lackieranlage umfasst vorzugsweise mindestens einen "zweistöckig" aufgebauten Reingassammelkanal, wobei die beiden "Stockwerke" vorzugsweise über mindestens einen Ventilator, welcher beispielsweise als Axialventilator ausgebildet und in der die beiden "Stockwerke" trennenden Zwischendecke angeordnet ist, miteinander verbunden sind.

Die in dem Reingassammelkanal gesammelte Luft (Reingas) wird vorzugsweise parallel zur Förderrichtung der Fördervorrichtung der Lackieranlage zu einer Stirnseite der Lackieranlage geführt und im Bereich einer Schleuse der Lackierkabine zumindest näherungsweise senkrecht nach oben zu einem Plenum der Lackieranlage geführt. Ein solcher Kanal zum Zuführen des mittels des Reingassammelkanals gesammelten Reingases zu dem Plenum kann beispielsweise nach jeweils vier oder mehr Filtervorrichtungen vorgesehen sein.

Vorzugsweise umfasst mindestens eine Filtervorrichtung mindestens ein, beispielsweise senkrecht hängendes, Filterelement, welches innerhalb einer vertikalen Projektion der Lackierkabine unter der Lackierkabine angeordnet ist und aus der Filtervorrichtung ausgebaut werden kann.

Bei einer Ausgestaltung der Lackieranlage ist vorgesehen, dass die Lackieranlage mindestens einen Drucklufttank umfasst, welcher beispielsweise oberhalb, insbesondere über, mindestens einer Filtervorrichtung angeordnet ist.

Vorteilhaft kann es sein, wenn verschiedene Reingasleitungen, welche Reingas von verschiedenen Filtervorrichtungen einem Reingassammelkanal zuführen, mit unterschiedlichen Konditioniervorrichtungen versehen sind. So kann beispielsweise vorgesehen sein, dass mindestens eine Reingasleitung von mindestens einer Filtervorrichtung mit einer als Kühlvorrichtung ausgebildeten Konditioniervorrichtung versehen ist und dass mindestens eine weitere Reingasleitung von einer anderen Filtervorrichtung mit einer als Befeuchtungsvorrichtung ausgebildeten Konditioniervorrichtung versehen ist. Die für den Betrieb der Lackieranlage notwendige Wärme des der Lackierkabine zuzuführenden Gasstroms wird demselben vorzugsweise mittels mindestens eines Ventilators zugeführt, das heißt diese Wärme stammt vorzugsweise aus der Kompressionswärme des mindestens einen Ventilators.

Insbesondere dann, wenn in verschiedenen Reingasleitungen verschiedene Konditioniervorrichtungen vorgesehen sind, kann vorgesehen sein, dass die benötigte Temperatur und/oder Luftfeuchtigkeit des der Lackierkabine zuzuführenden Gasstroms durch Vermischen unterschiedlich konditionierter, aus unterschiedlichen Reingasleitungen stammender Reingasströme erhalten wird. Vorzugsweise umfasst mindestens eine Filtervorrichtung mindestens einen Trichter.

Mindestens eine Filtervorrichtung ist günstigerweise begehbar, das heißt, dass eine Person in einen Innenraum der mindestens einen Filtervorrichtung eintreten kann.

Günstig kann es sein, wenn mindestens eine Filtervorrichtung mit Filterhilfsmaterial (beispielsweise Steinmehl) versorgt werden kann und/oder Filterhilfsmaterial aus der Filtervorrichtung entsorgt werden kann.

Grundsätzlich kann ein 2,5m Modul als Filtervorrichtung vorgesehen sein, welche einen Volumenstrom von beispielsweise zwischen ungefähr 15.000 m³/h und ungefähr 30.000 m³/h ermöglicht. Insbesondere kann vorgesehen sein, dass bei einem Druck von 1.200 Pa ein Volumenstrom von beispielsweise ungefähr 22.000 m³/h und bei ungefähr 1.000 Pa ein Volumenstrom von beispielsweise ungefähr 20.000 m³/h realisierbar ist. Dies entspricht im Wesentlichen dem doppelten Volumenstrom des bislang bekannten 2m Moduls.

Weitere Merkmale und/oder Vorteile sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Lackieranlage, mit Blick auf eine Wartungsseite der Lackieranlage;
- Fig. 2: eine schematische perspektivische Darstellung der Lackieranlage aus Fig. 1, mit Blick auf eine der Wartungsseite der Lackieranlage gegenüberliegende Rückseite der Lackieranlage;
- Fig. 3: eine schematische perspektivische Darstellung eines Filtermoduls einer Filteranlage der Lackieranlage aus Fig. 1;
- Fig. 4: einen schematischen vertikalen Querschnitt durch die Lackieranlage aus Fig. 1;
- Fig. 5: eine schematische Draufsicht auf die Wartungsseite der Lackieranlage aus Fig. 1;
- Fig. 6: eine schematische Schnittdarstellung eines Einlasskanals einer Filtervorrichtung der Filteranlage der Lackieranlage aus Fig. 1;
- Fig. 7: eine schematische perspektivische Darstellung des Einlasskanals aus Fig. 6;
- Fig. 8: eine schematische perspektivische Darstellung einer Filterhilfsmaterialeinbringeinrichtung einer Filtervorrichtung der Filteranlage der Lackieranlage aus Fig. 1;
- Fig. 9: eine schematische Seitenansicht der Filterhilfsmaterialeinbringeinrichtung aus Fig. 8, mit Blick auf die im montierten Zustand der Filterhilfsmaterialeinbringeinrichtung der Wartungsseite der Lackieranlage zugewandte Seite der Filterhilfsmaterialeinbringeinrichtung;
- Fig. 10: eine schematische Darstellung eines vertikalen Schnitts durch die Filterhilfsmaterialeinbringeinrichtung aus Fig. 8 längs der Linie 10-10 in Fig. 9;
- Fig. 11: eine der Fig. 10 entsprechende Schnittdarstellung einer alternativen Ausführungsform einer Filterhilfsmaterialeinbringeinrichtung, welche Mahlplatten umfasst;
- Fig. 12: eine der Fig. 10 entsprechende Schnittdarstellung einer weiteren alternativen Ausführungsform einer Filterhilfsmaterialeinbringeinrichtung, bei welcher Mahlkugeln vorgesehen sind;
- Fig. 13: eine schematische Schnittdarstellung einer Konditioniervorrichtung der Lackieranlage aus Fig. 1;
- Fig. 14: einen der Fig. 4 entsprechenden schematischen vertikalen Querschnitt durch eine alternative Ausführungsform einer Lackieranlage, bei welcher eine Konditioniervorrichtung stromabwärts eines Ventilators angeordnet ist;
- Fig. 15: eine schematische Draufsicht von oben auf die Lackieranlage aus Fig. 14;
- Fig. 16: eine der Fig. 15 entsprechende schematische Draufsicht von oben auf eine weitere alternative Ausführungsform einer Lackieranlage, welche zwei Filtervorrichtungen umfasst;
- Fig. 17: einen der Fig. 14 entsprechenden schematischen vertikalen Querschnitt durch eine erfindungsgemäße Ausführungsform einer Lackieranlage, bei welcher ein Reingaskanal einen Rohgasschacht durchquert;
- Fig. 18: eine der Fig. 15 entsprechende schematische Draufsicht auf die Lackieranlage aus Fig. 17;
- Fig. 19: eine der Fig. 18 entsprechende schematische Draufsicht auf eine weitere alternative Ausführungsform einer Lackieranlage, welche drei Filtervorrichtungen umfasst; und
- Fig. 20: eine schematische Darstellung der Funktionsweise der verschiedenen Ausführungsformen von Lackieranlagen.

Gleiche oder funktional äquivalente Elemente sind in sämtlichen Figuren mit denselben Bezugzeichen versehen.

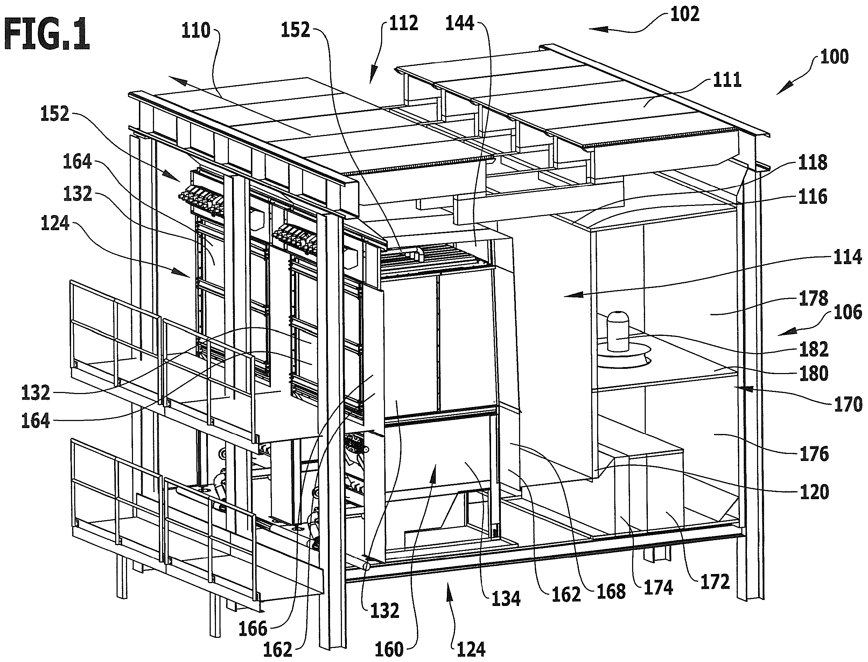

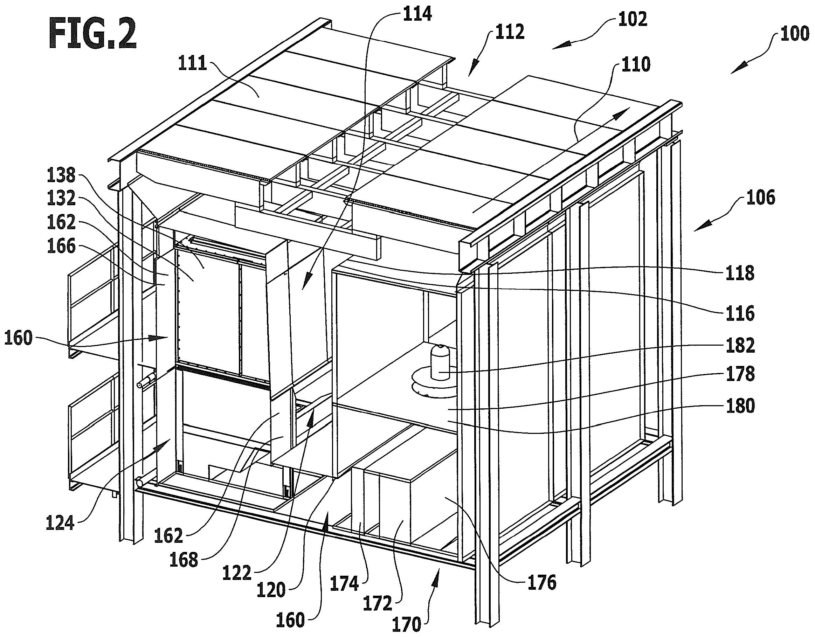

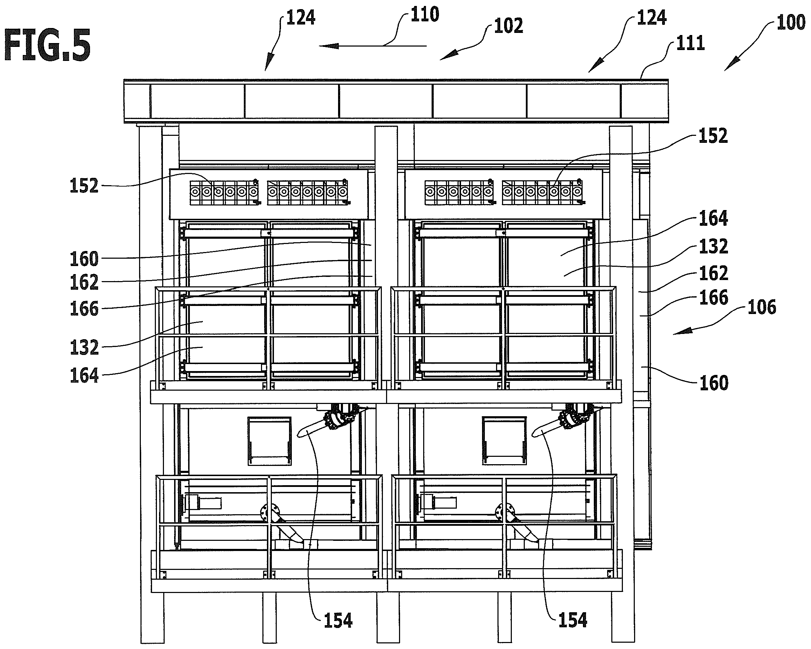

Eine in den Fig. 1 bis 10 dargestellte, als Ganzes mit 100 bezeichnete Lackieranlage umfasst eine Lackierkabine 102, in welcher Werkstücke 104, beispielsweise mit Fluidlack, insbesondere mit Nasslack, lackierbar sind, und eine Filteranlage 106, mit welcher ein durch die Lackierkabine 102 geführter Luftstrom gereinigt werden kann.

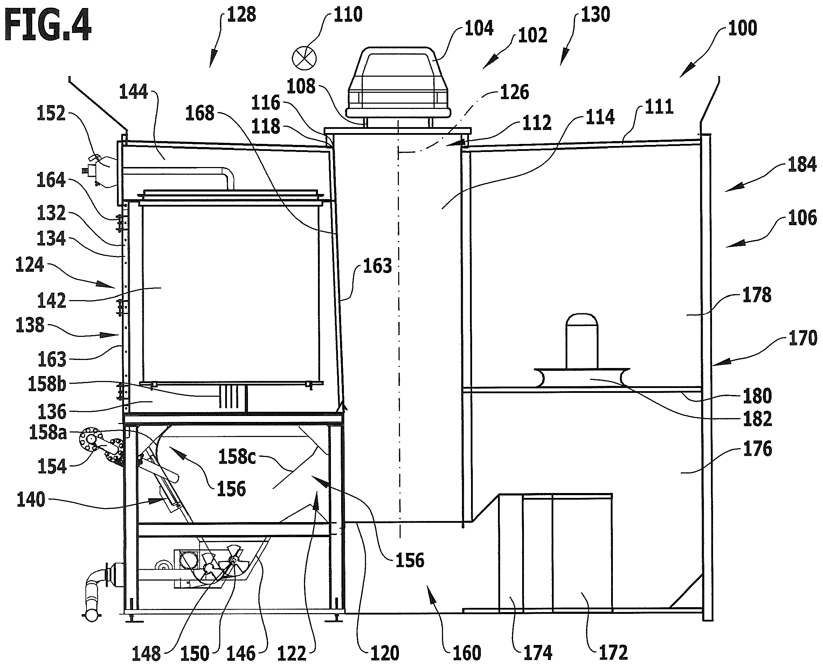

Die Lackierkabine 102 umfasst eine Fördervorrichtung 108, mittels welcher die Werkstücke 104, beispielsweise Fahrzeugkarosserien, in einer Förderrichtung 110 durch die Lackierkabine 102 hindurch befördert werden können (siehe insbesondere Fig. 4).

Beim Lackieren der Werkstücke 104 in der Lackierkabine 102 entsteht Overspray, beispielsweise bei der Verwendung von Nasslack Nasslack-Overspray, welcher von der durch die Lackierkabine 102 geführten Luft aufgenommen wird und diese somit verunreinigt.

Unter der Lackierkabine 102 der Lackieranlage 100 ist daher die Filteranlage 106 angeordnet, mittels welcher der Overspray aus der durch die Lackierkabine 102 geführten Luft entfernt werden kann.

Nachfolgend wird auf die durch die Lackierkabine 102 geleitete mit Overspray-Partikeln beladene Luft als Rohgasstrom Bezug genommen.

Um den Rohgasstrom von der Lackierkabine 102 der Filteranlage 106 zuführen zu können, ist ein Lackierkabinenboden 111 der Lackierkabine 102 mit einer sich in der Förderrichtung 110 erstreckenden Öffnung 112 versehen, welche bezüglich einer senkrecht zur Förderrichtung 110 verlaufenden horizontalen Richtung mittig in dem Lackierkabinenboden 111 angeordnet ist.

Unter der Öffnung 112 ist ein im Wesentlichen quaderförmiger Rohgasschacht 114 der Filteranlage 106 angeordnet.

Der Rohgasschacht 114 der Filteranlage 106 erstreckt sich in der Förderrichtung 110 und in vertikaler Richtung und ist bezüglich einer horizontal und senkrecht zur Förderrichtung 100 verlaufenden Richtung im Wesentlichen mittig in der Filteranlage 106 angeordnet.

Ein in vertikaler Richtung oberes Ende 116 des Rohgasschachts 114 ist der Öffnung 112 der Lackierkabine 102 zugewandt und bildet eine Einströmöffnung 118 des Rohgasschachts 114, durch welche der Rohgasstrom in den Rohgasschacht 114 eintreten kann.

Ein dem oberen Ende 116 gegenüberliegend angeordnetes, in der vertikalen Richtung unteres Ende 120 des Rohgasschachts 114 grenzt an mehrere Einlasskanäle 122 von mehreren regenerierbaren Filtervorrichtungen 124 an, so dass der Rohgasstrom mittels des Rohgasschachts 114 den Filtervorrichtungen 124 zuführbar ist.

Wie insbesondere Fig. 4 zu entnehmen ist, lässt sich die Filteranlage 106 mittels einer vertikalen Längsmittelebene 126 der Lackierkabine 102 in eine bezüglich der Förderrichtung 110 der Fördervorrichtung 108 der Lackierkabine 102 linke Seite 128 und eine der linken Seite 128 bezüglich der vertikalen Längsmittelebene 126 der Lackierkabine 102 gegenüberliegend angeordnete rechte Seite 130 aufteilen.

Auf der linken Seite 128 der Filteranlage 106 ist eine Reihe von Filtervorrichtungen 124 angeordnet, welche in der Förderrichtung 110 hintereinander angeordnet sind und jeweils einen an das untere Ende 120 des Rohgasschachts 114 angrenzenden Einlasskanal 122 aufweisen.

Jede der Filtervorrichtungen 124 ist dabei im Wesentlichen quaderförmig ausgebildet und umfasst eine Einhausung 134, welche durch in einem Winkel von vorzugsweise mindestens ungefähr 80° gegen die Horizontale geneigte Begrenzungswände 132 gebildet ist. Die Begrenzungswände 132 begrenzen eine Rohgaskammer 136.

Die Einhausung 134 einer jeden Filtervorrichtung 124 lässt sich in einen Filterabschnitt 138 und einen Trichterabschnitt 140 einteilen.

Der Filterabschnitt 138 ist im Wesentlichen quaderförmig ausgebildet und dient der Aufnahme mehrerer Filterelemente 142.

Der unter dem Filterabschnitt 138 angeordnete Trichterabschnitt 140 weist einen im Wesentlichen dreiecksförmigen Querschnitt auf und dient der Zuführung des Rohgasstroms zu den Filterelementen 142 sowie der Anreicherung des Rohgasstroms mit Filterhilfsmaterial.

Über den Filterelementen 142 der Filtervorrichtung 124 ist eine Reingaskammer 144 angeordnet, welche mittels der Filterelemente 142 von der Rohgaskammer 136 getrennt ist.

Die Filtervorrichtung 124 umfasst ferner einen Filterhilfsmaterialaufnahmebehälter 146, welcher an einem unteren Ende des Trichterabschnitts 140 angeordnet ist und der Aufnahme von Filterhilfsmaterial dient.

In dem Filterhilfsmaterialaufnahmebehälter 146 ist eine Filterhilfsmaterialeinbringeinrichtung 148 angeordnet, mittels welcher Filterhilfsmaterial in den durch den Einlasskanal 122 einströmenden Rohgasstrom eingebracht werden kann.

Die Filterhilfsmaterialeinbringeinrichtung 148 ist beispielsweise als Behandlungsvorrichtung 150 zum mechanischen Behandeln des im Filterhilfsmaterialaufnahmebehälter 146 angeordneten Filterhilfsmaterials oder eines in dem Filterhilfsmaterialaufnahmebehälter 146 angeordneten Gemisches aus Filterhilfsmaterial und Overspray-Partikeln ausgebildet.

Mittels der Filterhilfsmaterialeinbringeinrichtung 148 kann Filterhilfsmaterial in der Rohgaskammer 136 aufgewirbelt und an den Filterelementen 142 angelagert werden, wodurch eine Schutzschicht auf den Filterelementen 142 ausgebildet wird.

Um die Schutzschicht aus Filterhilfsmaterial von den Filterelementen 142 zu entfernen, ist in der Reingaskammer 144 eine Druckluftvorrichtung 152 vorgesehen, mittels welcher den Filterelementen 142 Druckluft zuführbar ist.

Die Druckluft ist dabei mittels der Druckluftvorrichtung 152 den Filterelementen 142 in einer Richtung zuführbar, welche der Strömungsrichtung des zu reinigenden Gases in einem Filterbetrieb der Filtervorrichtung 124 entgegengesetzt ist, so dass mittels der Druckluftvorrichtung 152 eine Schutzschicht aus Filterhilfsmaterial besonders einfach von den Filterelementen 142 entfernt werden kann.

Insbesondere um frisches Filterhilfsmaterial zu dem Trichterabschnitt 140 der Filtervorrichtung 124 zuführen zu können, ist eine Zuführvorrichtung 154 im Bereich des Trichterabschnitts 140 der Filtervorrichtung 124 vorgesehen.

Der Einlasskanal 122, durch welchen der Rohgasstrom der Rohgaskammer 136 der Filtervorrichtung 124 zuführbar ist, ist mit einer Strömungsführungsvorrichtung 156 versehen, welche mindestens ein Strömungselement 158 aufweist und der Beeinflussung der Strömungsrichtung und/oder der Strömungsgeschwindigkeit des durch den Einlasskanal 122 der Filtervorrichtung 124 zugeführten Rohgasstroms dient.

Ferner ist in der Rohgaskammer 136 eine weitere Strömungsführungsvorrichtung 156 vorgesehen, welche ein als Leitblech ausgebildetes Strömungselement 158a und mehrere, beispielsweise vier, stabförmige Strömungselemente 158b umfasst (siehe Fig. 4), welche der Turbulenzbildung und der gezielten Zuführung des Rohgasstroms zu den Filterelementen 142 dienen.

Durch die Reinigung des Rohgasstroms mittels der Filtervorrichtungen 124 kann ein Reingasstrom erhalten werden, welcher zunächst die Reingaskammer 144 durchströmt.

An die Reingaskammer 144 grenzt eine Reingasleitung 160 an, mittels welcher der Reingasstrom aus der Reingaskammer 144 benachbart zu der Filtervorrichtung 124 vertikal nach unten geführt werden kann. Grundsätzlich kann für jede Filtervorrichtung 124 eine separate Reingasleitung 160 vorgesehen sein. Vorteilhaft kann es aber sein, wenn der gereinigte Gasstrom aus zwei Filtervorrichtungen 124, insbesondere zwischen den beiden Filtervorrichtungen 124, mittels einer gemeinsamen Reingasleitung 160 abgeführt wird.

Die Reingasleitung 160 umfasst hierzu Begrenzungswände 162, welche im Wesentlichen mit den zumindest näherungsweise parallel zur vertikalen Längsmittelebene 126 der Lackierkabine 102 verlaufenden Begrenzungswänden 132 der Filtervorrichtung 124 fluchten. Die Reingasleitung 160 ragt somit in diesem Abschnitt in horizontaler Richtung und senkrecht zur Förderrichtung 110 nicht über die Filtervorrichtung 124 hinaus und ist somit innerhalb einer Außenkontur 163 der Filtervorrichtung 124 angeordnet.

Insbesondere ist dabei vorgesehen, dass eine der vertikalen Längsmittelebene 126 der Lackierkabine 102 abgewandte äußere Begrenzungswand 164 der Filtervorrichtung 124 mindestens genau so weit von der vertikalen Längsmittelebene 126 der Lackierkabine 102 beabstandet angeordnet ist wie eine der vertikalen Längsmittelebene 126 der Lackierkabine 102 abgewandte äußere Begrenzungswand 166 der Reingasleitung 160.

Die der vertikalen Längsmittelebene 126 der Lackierkabine 102 zugewandten Begrenzungswände 132, 162 der Filtervorrichtung 124 bzw. der Reingasleitung 160 fluchten vorzugsweise miteinander, so dass durch diese Begrenzungswände 132, 162 eine im Wesentlichen ebene Begrenzungswand 168 des Rohgasschachts 114 gebildet ist.

Die Reingasleitung 160 erstreckt sich von der Reingaskammer 144 bis unterhalb des Trichterabschnitts 140 der Filtervorrichtung 124 und von dort ausgehend im Wesentlichen senkrecht zur Förderrichtung 110 in horizontaler Richtung unter dem Rohgasschacht 114 hindurch auf die der linken Seite 128 der Filteranlage 106 gegenüberliegende rechte Seite 130 der Filteranlage 106.

Auf dieser rechten Seite 130 der Filteranlage 106 ist ein Reingassammelkanal 170 angeordnet, in welchen die Reingasleitung 160 mündet.

Zur Konditionierung des in der Reingasleitung 160 geführten Reingasstroms kann in der Reingasleitung 160 mindestens eine Konditioniervorrichtung 172 vorgesehen sein, welche beispielsweise als Heizvorrichtung, als Kühlvorrichtung, als Befeuchtungsvorrichtung und/oder als Entfeuchtungsvorrichtung ausgebildet ist.

Bezüglich der Strömungsrichtung des Reingasstroms vor, das heißt stromaufwärts, der Konditioniervorrichtung 172 ist ein Sicherheitsfilter 174 angeordnet, mittels welchem verhindert werden kann, dass im Falle einer unerwünschten Beschädigung eines Filterelements 142 einer Filtervorrichtung 124 Filterhilfsmaterial zu der Konditioniervorrichtung 172 gelangt und diese hierdurch beschädigt wird.

Der mittels der Konditioniervorrichtung 172 konditionierte Reingasstrom wird dann einem Mündungsbereich 176 des Reingassammelkanals 170 zugeführt, in welchen mehrere Reingasleitungen 160 der verschiedenen Filtervorrichtungen 124 münden.

Der Reingassammelkanal 170 umfasst neben dem Mündungsbereich 176 einen Abführungsbereich 178, über welchen der gereinigte und konditionierte Gasstrom zur erneuten Verwendung in der Lackierkabine 102 aus der Filteranlage 106 abgeführt werden kann.

Der Reingassammelkanal 170 ist somit zweigeteilt ausgebildet, wobei der Mündungsbereich 176 unter dem Abführungsbereich 178 angeordnet und mittels einer sich längs einer horizontalen Ebene erstreckenden Trennwand 180 von demselben getrennt ist.

In der Trennwand 180 sind mehrere Ventilatoren 182 angeordnet, mittels welchen das Reingas aus dem Mündungsbereich 176 in den Abführungsbereich 178 des Reingassammelkanal 170 bewegt werden kann und welche somit auch insgesamt den Reingasstrom und/oder den Rohgasstrom in der Lackieranlage 100 antreiben.

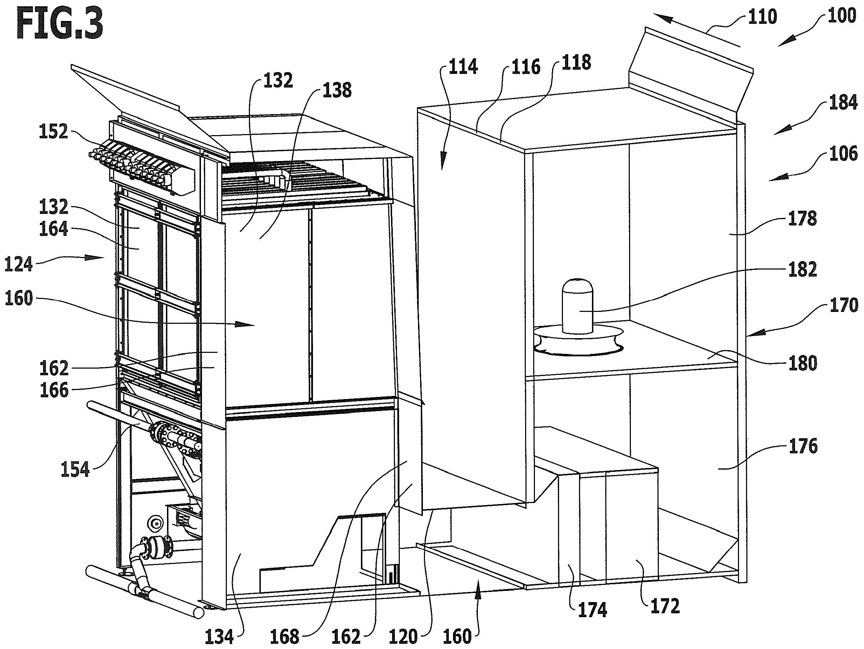

Wie insbesondere Fig. 3 zu entnehmen ist, kann vorgesehen sein, dass die Filtervorrichtung 124, die Reingasleitung 160, ein Abschnitt des Reingassammelkanals 170, die Konditioniervorrichtung 172, das Sicherheitsfilter 174 und ein Abschnitt des Rohgasschachts 114 gemeinsam ein Filtermodul 184 bilden.

Ein Filtermodul 184 ist dabei insbesondere eine vormontierte Einheit, welche getrennt von einem Aufstellungsort der Lackieranlage 100 zusammengebaut werden kann und zur Fertigstellung der Lackieranlage 100 lediglich noch mit anderen Komponenten, insbesondere mit weiteren, insbesondere identisch ausgebildeten, Filtermodulen 184 verbunden werden muss.

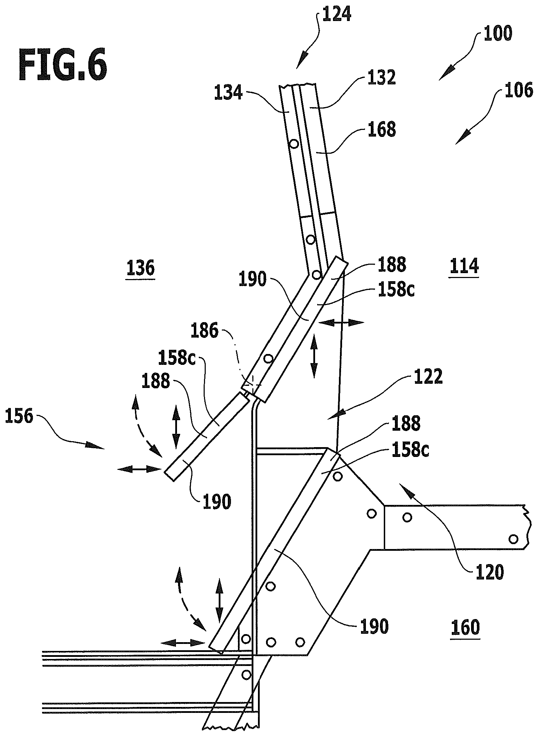

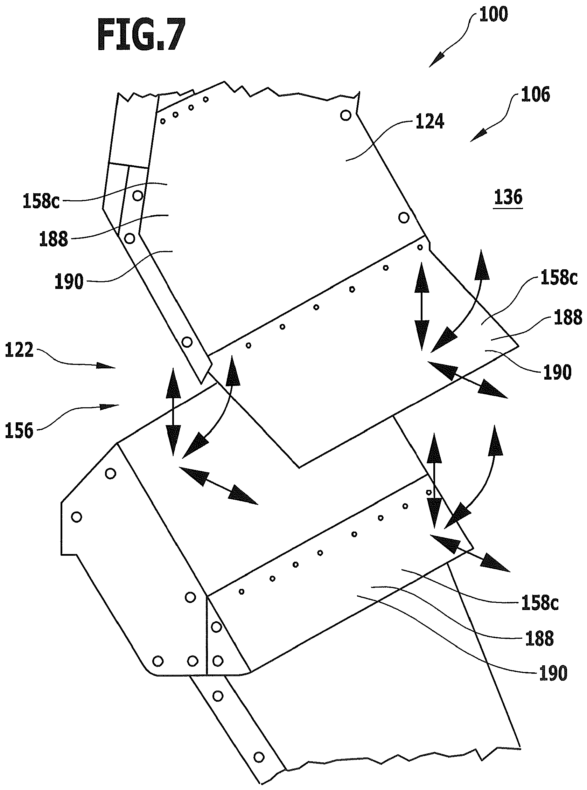

Wie insbesondere den Fig. 6 und 7 zu entnehmen ist, umfasst die Strömungsführungsvorrichtung 156 im Bereich des Einlasskanals 122 der Filtervorrichtung 124 beispielsweise drei Strömungselemente 158c, mittels welchen die Richtung und/oder die Geschwindigkeit des über den Rohgasschacht 114 der Rohgaskammer 136 zuzuführenden Rohgasstroms gesteuert und/oder geregelt werden kann.

Die Strömungselemente 158c sind hierzu in horizontaler und/oder vertikaler Richtung bewegbar und/oder um eine Rotationsachse 186 drehbar.

Bei der in den Fig. 6 und 7 dargestellten Ausführungsform der Strömungsführungsvorrichtung 156 sind die Strömungselemente 158c im Bereich des Einlasskanals 122 als Leitbleche 188 ausgebildet und bilden Begrenzungswände 190 des Einlasskanals 122.

Insbesondere durch eine Bewegung der Strömungselemente 158c relativ zueinander kann somit ein Querschnitt des Einlasskanals 122 variiert werden, wodurch sich insbesondere die Geschwindigkeit des durch den Einlasskanal 122 geführten Rohgasstroms einstellen lässt.

Ferner kann mittels der Strömungselemente 158c eingestellt werden, an welcher Stelle der Rohgasstrom in die Rohgaskammer 136 geführt wird und wie tief der Gasstrom in den Trichterabschnitt 140 der Filtervorrichtung 124 gelangt. Damit lässt sich auch einstellen, in welchem Maß Filterhilfsmaterial aus dem Filterhilfsmaterialaufnahmebehälter 146 mittels des Rohgasstroms aufgewirbelt und von dem Rohgasstrom mitgerissen wird.

Durch eine Veränderung des Winkels, welchen die Strömungselemente 158c miteinander und/oder mit weiteren Begrenzungswänden 190 des Einlasskanals 122 und/oder mit Begrenzungswänden 132 der Filtervorrichtung 124 und/oder mit Begrenzungswänden 168 des Rohgasschachts 114 einschließen, kann verhindert oder begünstigt werden, dass im Filterbetrieb der Filtervorrichtung 124 entlang der Strömungselemente 158c Rückströmungen entstehen.

Rückströmungen können dazu dienen, Filterhilfsmaterial auf mindestens einem der Strömungselemente 158c bis zu einer Abrisskante abzulagern, um zumindest dieses Strömungselement 158c vor einer Verunreinigung mit Overspray-Partikeln zu schützen. Eine Verhinderung der Rückströmung kann hingegen günstig sein für einen Wartungsbetrieb der Filtervorrichtung 124, da hierdurch eine automatische Abreinigung von anhaftendem Filterhilfsmaterial erfolgen kann, ohne dass eine manuelle Reinigung durchgeführt werden muss.

Eine Veränderung der Position und/oder Ausrichtung mindestens eines Strömungselements 158c, welches dann ein variables Strömungselement 158c bildet, kann beispielsweise mittels einer (nicht dargestellten) Antriebsvorrichtung, beispielsweise mittels eines Elektromotors, erfolgen. Ferner kann vorgesehen sein, dass mindestens ein Strömungselement 158c, beispielsweise motorisch, verlängert und/oder verkürzt werden kann.

Vorzugsweise ist mindestens eines der als Leitbleche 188 ausgebildeten Strömungselemente 158c so ausgebildet, dass der Einlasskanal 122 der Filtervorrichtung 124 wahlweise vollständig geschlossen werden kann. Auf diese Weise kann insbesondere eine Rückströmung von Filterhilfsmaterial in den Rohgasschacht 114 und anschließend in die Lackierkabine 102 verhindert werden.

Ferner kann hierdurch ein unerwünschtes Eindringen von Reinigungsmitteln und/oder anderen Fluiden in die Rohgaskammer 136 der Filtervorrichtung 124 verhindert werden, was beispielsweise bei einer Nassreinigung der Lackierkabine 102 oder im Falle einer Sprinklerauslösung im Brandfall vorteilhaft sein kann.

Insbesondere eine horizontale Verschiebung mindestens eines Strömungselements 158 wird vorzugsweise unabhängig von den übrigen Bauteilen der Filtervorrichtung 124 durchgeführt.

Auf diese Weise kann beispielsweise mittels eines bezüglich des Trichterabschnitts 140 der Filtervorrichtung 124 versetzt angeordneten Strömungselements 158 bewirkt werden, dass der Rohgasstrom nicht entlang der Begrenzungswand 132 des Trichterabschnitts 140 der Filtervorrichtung 124, sondern direkt in die Mitte des Filterhilfsmaterialaufnahmebehälters 146, insbesondere direkt in die Mitte der Filterhilfsmaterialeinbringeinrichtung 148, strömt, so dass besonders viel Filterhilfsmaterial aufgenommen und an die Filterelemente 142 der Filtervorrichtung 124 transportiert werden kann.

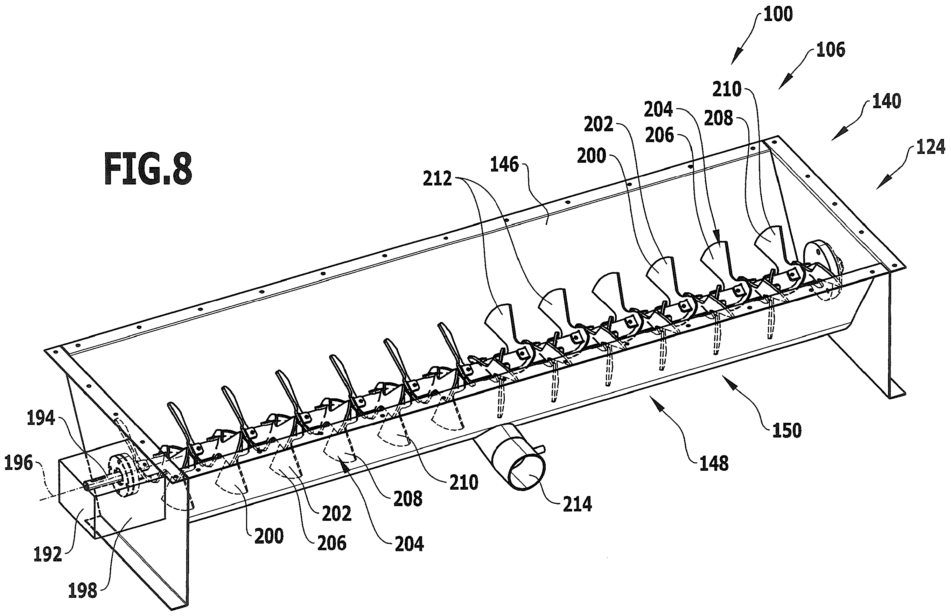

Fig. 8 zeigt eine vergrößerte perspektivische Darstellung des Filterhilfsmaterialaufnahmebehälters 146 und der darin angeordneten Filterhilfsmaterialeinbringeinrichtung 148 der Lackieranlage 100.

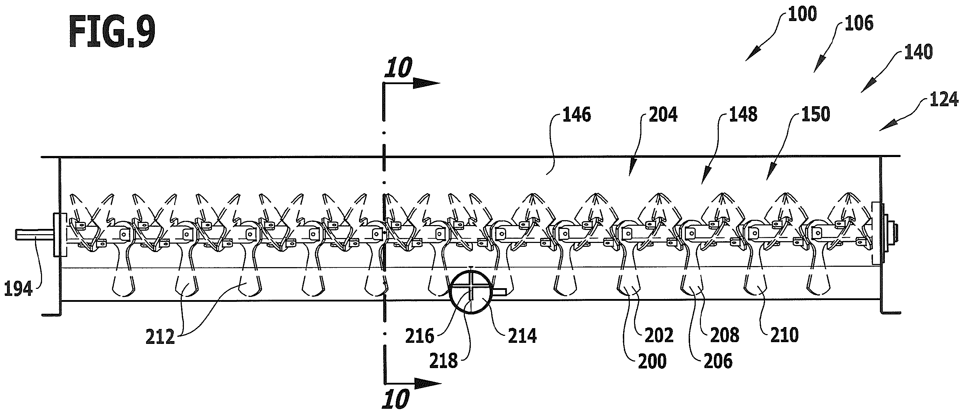

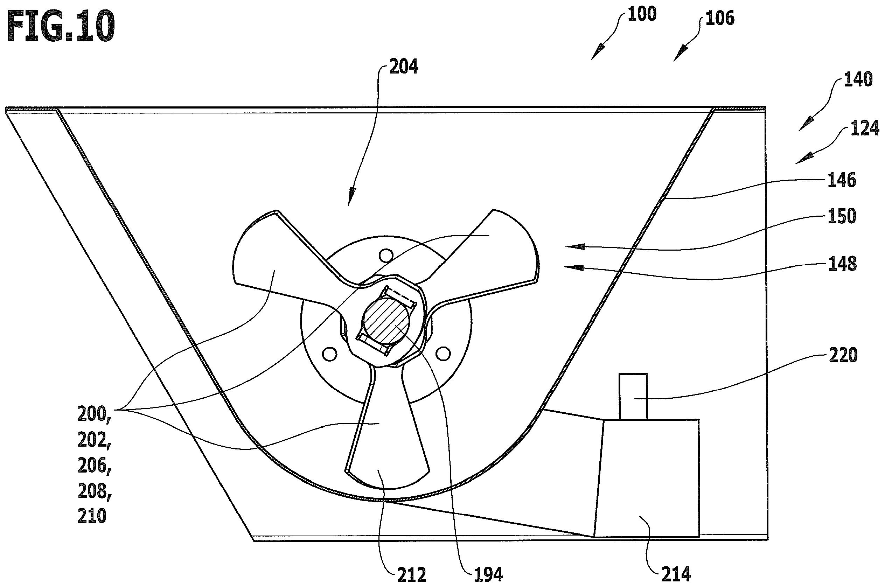

Wie dieser und den Fig. 9 und 10 zu entnehmen ist, umfasst die Filterhilfsmaterialeinbringeinrichtung 148 eine mittels einer Antriebsvorrichtung 192, welche beispielsweise einen Elektromotor umfasst, drehbare Welle 194, welche sich im Wesentlichen parallel zur Förderrichtung 110 der Fördervorrichtung 108 der Lackieranlage 100 erstreckt und um eine Rotationsachse 196, welche ebenfalls parallel zur Förderrichtung 110 der Fördervorrichtung 108 der Lackieranlage 100 ausgerichtet ist, drehbar ist.

Eine Drehgeschwindigkeit der Welle 194 der Filterhilfsmaterialeinbringeinrichtung 148 wird dabei mit einer Steuervorrichtung 198 gesteuert und/oder geregelt.

Auf der Welle 194 der Filterhilfsmaterialeinbringeinrichtung 148 ist eine Vielzahl von Behandlungselementen 200 angeordnet, welche beispielsweise als Paddel 202 ausgebildet sind, so dass die Filterhilfsmaterialeinbringeinrichtung 148 als Paddelmischer 204 bezeichnet werden kann.

Die Filterhilfsmaterialeinbringeinrichtung 148 ist eine Behandlungsvorrichtung 150 zum mechanischen Behandeln von in dem Filterhilfsmaterialaufnahmebehälter 146 angeordnetem Filterhilfsmaterial oder eines in dem Filterhilfsmaterialaufnahmebehälter 146 angeordneten Gemisches aus Filterhilfsmaterial und Overspray-Partikeln.

Die Behandlungsvorrichtung 150 dient dabei der Förderung von Filterhilfsmaterial innerhalb des Filterhilfsmaterialaufnahmebehälters 146. Die Behandlungselemente 200 der Behandlungsvorrichtung 150 sind somit Förderelemente 206.

Ferner dienen die Behandlungselemente 200 der Behandlungsvorrichtung 150 der Aufwirbelung von Filterhilfsmaterial oder eines Gemisches aus Filterhilfsmaterial und Overspray-Partikeln, so dass die Behandlungselemente 200 der Behandlungsvorrichtung 150 Auflockerungslemente 208 bilden.

Schließlich dienen die Behandlungselemente 200 der Behandlungsvorrichtung 150 auch dem Durchmischen von in dem Filterhilfsmaterialaufnahmebehälter 146 angeordnetem Filterhilfsmaterial oder eines in dem Filterhilfsmaterialaufnahmebehälter 146 angeordneten Gemisches aus Filterhilfsmaterial und Overspray-Partikeln, so dass die Behandlungselemente 200 der Behandlungsvorrichtung 150 auch Mischelemente 210 bilden.

Grundsätzlich können die Behandlungselemente 200 der Behandlungsvorrichtung 150 je nach Aufgabe unterschiedliche Formen aufweisen.

Bei der in den Fig. 8 bis 10 dargestellten Ausführungsform der Filterhilfsmaterialeinbringeinrichtung 148 ist jedoch eine im Wesentlichen einheitliche Form der Behandlungselemente 200 vorgesehen.

Lediglich die Ausrichtung der Behandlungselemente 200 in einem Behandlungsbereich 212 relativ zur Rotationsachse 196 der Filterhilfsmaterialeinbringeinrichtung 148 ist nicht für alle Behandlungselemente 200 einheitlich. Vielmehr sind die Behandlungselemente 200 in den Behandlungsbereichen 212 so bezüglich der Rotationsachse 196 der Filterhilfsmaterialeinbringeinrichtung 148 gedreht angeordnet, dass durch eine Rotation der Welle 194 und somit der Behandlungselemente 200 um die Rotationsachse 196 in dem Filterhilfsmaterialaufnahmebehälter 146 angeordnetes Filterhilfsmaterial oder ein Gemisch aus Filterhilfsmaterial und Overspray-Partikeln zu einem im Wesentlichen mittig an dem Filterhilfsmaterialaufnahmebehälter 146 angeordneten Auslass 214 des Filterhilfsmaterialaufnahmebehälters 146 gefördert werden kann.

Mittels des Auslasses 214 des Filterhilfsmaterialaufnahmebehälters 146 kann Filterhilfsmaterial oder ein Gemisch aus Filterhilfsmaterial und Overspray-Partikeln aus dem Filterhilfsmaterialaufnahmebehälter 146 entnommen werden. Dies geschieht insbesondere dann, wenn die spezifische Aufnahmekapazität des Filterhilfsmaterials oder des Gemisches aus Filterhilfsmaterial und Overspray-Partikeln, welche ein Maß dafür ist, welche Menge an Overspray mittels des Filterhilfsmaterials oder des Gemisches aus Filterhilfsmaterial und Overspray-Partikeln noch aufgenommen werden kann, für einen zuverlässigen Filterbetrieb der Filtervorrichtung 124 nicht mehr ausreichend ist.

Insbesondere um ein Verstopfen des Auslasses 214 beim Abführen von Filterhilfsmaterial oder eines Gemisches aus Filterhilfsmaterial und Overspray-Partikeln, beispielsweise aufgrund von Agglomeratbildung, zu vermeiden, ist der Auslass 214 mit einer Sicherungsvorrichtung 216 versehen, welche beispielsweise durch zwei kreuzförmig angeordnete Stege 218 gebildet ist. Mittels der Sicherungsvorrichtung 216 kann insbesondere verhindert werden, dass zu große Agglomerate aus Filterhilfsmaterial und Lack-Overspray in den Auslass 214 gelangen und diesen verstopfen.

Wie insbesondere Fig. 10 zu entnehmen ist, umfasst der Filterhilfsmaterialaufnahmebehälter 146 ferner einen Druckluftanschluss 220, über welchen dem Auslass 214 Druckluft zuführbar ist. Dies kann einerseits der Entfernung einer Verstopfung in dem Auslass 214 und andererseits dem Antreiben von über den Auslass 214 abzuführendem Filterhilfsmaterial oder eines Gemisches aus Filterhilfsmaterial und Overspray-Partikeln dienen.

Die vorstehend beschriebene Lackieranlage 100 funktioniert wie folgt:
In der Lackierkabine 102 der Lackieranlage 100 wird ein Werkstück 104 mittels der Fördervorrichtung 108 in der Förderrichtung 110 gefördert und mittels (nicht dargestellter) Lackierroboter lackiert.

Ein durch die Lackierkabine 102 geführter Luftstrom wird hierdurch mit Overspray beaufschlagt und zusammen mit dem Overspray als Rohgasstrom über den Rohgasschacht 114 der Filteranlage 106 zugeführt. Der Rohgasschacht 114 leitet den Rohgasstrom den Filtervorrichtungen 124 zu.

Mittels Einlasskanälen 122 wird der Rohgasstrom dann auf die Rohgaskammern 136 der Filtervorrichtungen 124 verteilt.

Die Strömungsführungsvorrichtungen 156 der Filtervorrichtungen 124 dienen der gezielten Zuführung des Rohgasstroms zu den Rohgaskammern 136, wobei insbesondere mittels der einstellbaren Strömungselemente 158 eine gezielte Zuführung des Rohgasstroms zu den Filterhilfsmaterialaufnahmebehältern 146 und den darin angeordneten Filterhilfsmaterialeinbringeinrichtungen 148 erfolgt.

Hierdurch kann Filterhilfsmaterial aus einem Filterhilfsmaterialaufnahmebehälter 146 aufgewirbelt und von dem Rohgasstrom aufgenommen werden.

Bereits während der Durchströmung einer Rohgaskammer 136 lagern sich in dem Rohgasstrom vorhandene Overspray-Partikel an Partikeln des Filterhilfsmaterials an. Diese Agglomerate und noch nicht an Filterhilfsmaterialpartikel angelagerte Overspray-Partikel werden dann den Filterelementen 142 der Filtervorrichtungen 124 zugeführt und dort an einer aus Filterhilfsmaterial gebildeten Schutzschicht abgeschieden.

Der auf diese Weise von Overspray-Partikeln befreite Rohgasstrom wird als Reingasstrom über die Reingasleitung 160 von der Reingaskammer 144 zum Reingassammelkanal 170 geführt und dabei mittels der Konditioniervorrichtung 172 konditioniert, beispielsweise geheizt, gekühlt, befeuchtet und/oder entfeuchtet.

Bereits in dem Mündungsbereich 176 des Reingassammelkanals 170 vermischen sich die Reingasströme aus verschiedenen Filtervorrichtungen 124.

Mittels der Ventilatoren 182 in der Trennwand 180 des Reingassammelkanals 170 wird dann das Reingas dem Abführungsbereich 178 des Reingassammelkanals 170 zugeführt und anschließend mittels einer (nicht dargestellten) Umluftführungsvorrichtung erneut der Lackierkabine 102 der Lackieranlage 100 zugeführt.

Insbesondere während eines solchen Umluftbetriebes, in welchem der Gasstrom mehrfach durch die Lackierkabine 102 geleitet wird, kann mittels der Strömungsführungsvorrichtung 156 die Zufuhr des Rohgases zu der Rohgaskammer 136 beeinflusst werden, um den Rohgasstrom in den Filtervorrichtungen 124 an einen momentanen Volumenstrom des Rohgasstroms in dem Rohgasschacht 114 anzupassen.

Insbesondere wird hierzu mindestens ein variables Strömungselement 158 angepasst.

Besonders vorteilhaft kann es sein, wenn mindestens ein variables Strömungselement 158 um die Rotationsachse 186 drehbar ausgebildet ist und eine Masse aufweist, welche es ermöglicht, dass der durch den Einlasskanal 122 geführte Rohgasstrom das Strömungselement 158 aus einer Ruhelage, in welcher das Strömungselement 158 beispielsweise vertikal ausgerichtet ist, auslenkt.

Das Strömungselement 158 wird dann beim Durchströmen des Einlasskanals 122 mittels des Rohgasstroms selbsttätig bewegt, so dass sich ein Querschnitt des Einlasskanals 122 ohne separate Steuerung automatisch an einen aktuell herrschenden Volumenstrom des Rohgasstroms anpasst.

Hierdurch kann insbesondere eine vorteilhafte Aufwirbelung von Filterhilfsmaterial aus dem Filterhilfsmaterialaufnahmebehälter 146 und eine vorteilhafte Durchströmung der Rohgaskammer 136 zur zuverlässigen Abtrennung von Overspray-Partikeln aus dem Rohgasstrom erreicht werden.

Das in dem Filterhilfsmaterialaufnahmebehälter 146 angeordnete Filterhilfsmaterial oder ein Gemisch aus Filterhilfsmaterial und Overspray-Partikeln wird mittels der als Behandlungsvorrichtung 150 ausgebildeten Filterhilfsmaterialeinbringeinrichtung 148 durch Drehen der Behandlungselemente 200 der Behandlungsvorrichtung 150 mittels der Welle 194 um die Rotationsachse 196 gemischt, aufgewirbelt und gleichzeitig zu dem Auslass 214 des Filterhilfsmaterialaufnahmebehälters 146 gefördert.

Durch das Mischen des in dem Filterhilfsmaterialaufnahmebehälter 146 angeordneten Filterhilfsmaterials oder des Gemisches aus Filterhilfsmaterial und Overspray-Partikeln kann eine gleichbleibende Qualität, insbesondere eine gleichbleibende spezifische Aufnahmekapazität, des dem Rohgasstrom zugeführten Filterhilfsmaterials gewährleistet werden.

Durch die Aufwirbelung des Filterhilfsmaterials oder des Gemisches aus Filterhilfsmaterial und Overspray-Partikeln kann gewährleistet werden, dass dem Rohgasstrom stets eine ausreichende Menge an Filterhilfsmaterial zugeführt wird.

Durch die Förderung des Filterhilfsmaterials oder des Gemisches aus Filterhilfsmaterial und Overspray-Partikeln zu dem Auslass 214 des Filterhilfsmaterialaufnahmebehälters 146 hin kann zu stark mit Overspray-Partikeln verunreinigtes Filterhilfsmaterial besonders einfach dem Auslass 214 zugeführt und über diesen Auslass 214 aus dem Filterhilfsmaterialaufnahmebehälter 146 entfernt werden.

Insbesondere dann, wenn Filterhilfsmaterial aus dem Filterhilfsmaterialaufnahmebehälter 146 entfernt wurde, kann vorgesehen sein, dass über die Zuführvorrichtung 154 frisches, nicht mit Overspray-Partikeln beladenes Filterhilfsmaterial dem Trichterabschnitt 140 der Filtervorrichtung 124 und somit dem Filterhilfsmaterialaufnahmebehälter 146 zugeführt wird.

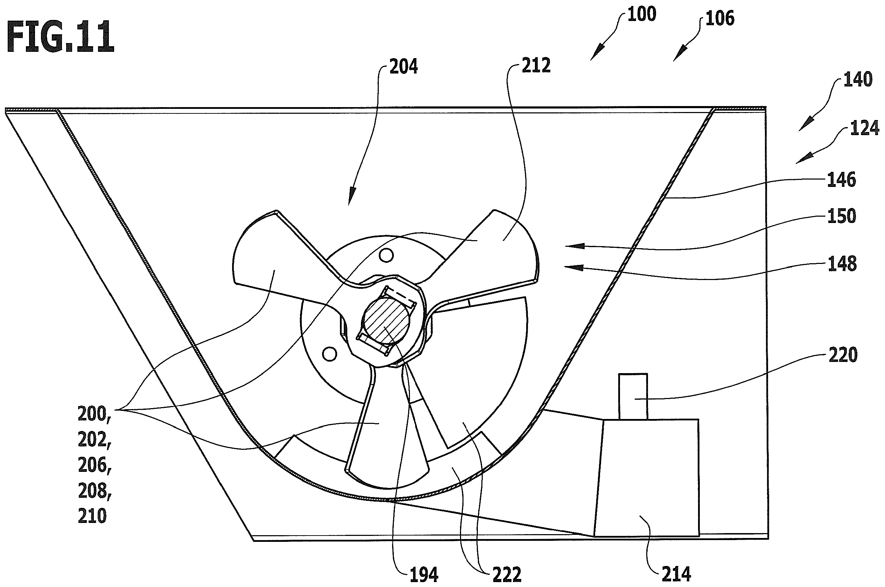

Eine in Fig. 11 dargestellte alternative Ausführungsform einer Filterhilfsmaterialeinbringeinrichtung 148 unterscheidet sich von der in den Fig. 1 bis 10 dargestellten Ausführungsform im Wesentlichen dadurch, dass zusätzlich zu den Behandlungselementen 200, welche Förderelemente 206, Auflockerungselemente 208 und zugleich Mischelemente 210 bilden, Mahlplatten 222 vorgesehen sind, mittels welchen Agglomerate aus Filterhilfsmaterial und Overspray-Partikeln aufgebrochen werden können und somit eine durchschnittliche Korngröße des Gemisches aus Filterhilfsmaterial und Overspray-Partikeln verringert werden kann.

Eine Mahlplatte 222 ist beispielsweise eine exzentrisch auf der Welle 194 montierte Scheibe.

Durch die Verwendung von Mahlplatten 222 als zusätzliche Behandlungselemente 200 der Behandlungsvorrichtung 150 kann ein Gemisch aus Filterhilfsmaterial und Overspray-Partikeln über einen längeren Zeitraum für einen Filterbetrieb der Filtervorrichtung 124 verwendet werden.

Im Übrigen stimmt die in Fig. 11 dargestellte Ausführungsform der Filterhilfsmaterialeinbringeinrichtung 148 hinsichtlich Aufbau und Funktion mit der in den Fig. 1 bis 10 dargestellten Ausführungsformen überein, so dass auf deren vorstehende Beschreibung insoweit Bezug genommen wird.

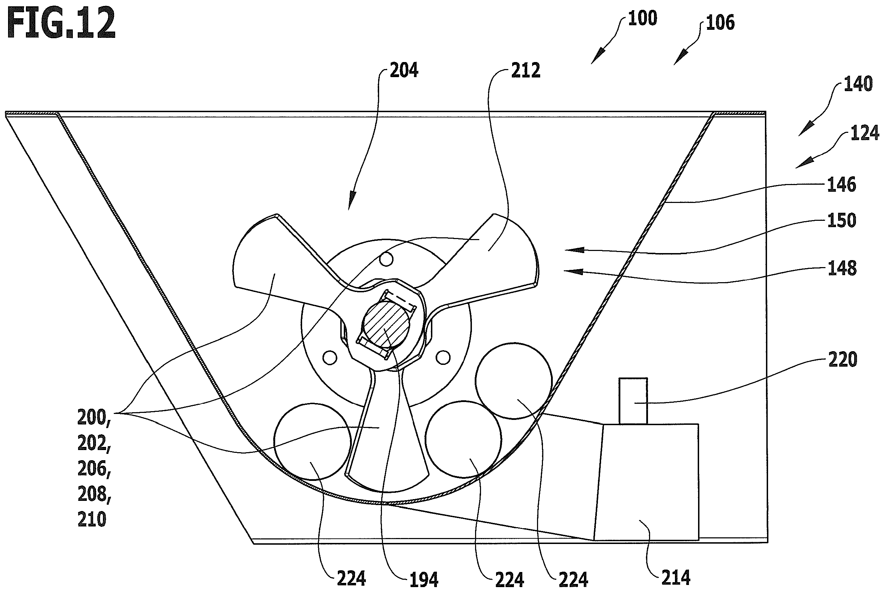

Eine in Fig. 12 dargestellte weitere alternative Ausführungsform der Filterhilfsmaterialeinbringeinrichtung 148 unterscheidet sich von der in Fig. 11 dargestellten Ausführungsform dadurch, dass zum Zerkleinern von Agglomeraten aus Filterhilfsmaterial und Overspray-Partikeln keine Mahlplatten 222, sondern nicht mit der Welle 194 verbundene Mahlkugeln 224 vorgesehen sind. Diese Mahlkugeln 224 werden durch die Drehung der Behandlungselemente 200 der Behandlungsvorrichtung 150 um die Rotationsachse 196 der Welle 194 in dem Filterhilfsmaterialaufnahmebehälter 146 hin und her bewegt, so dass sich der gewünschte Effekt der mechanischen Behandlung des Gemisches aus Filterhilfsmaterial und Overspray-Partikeln durch eine abrasive Wirkung der Mahlkugeln 224 ergibt.

Im Übrigen stimmt die in Fig. 12 dargestellte Ausführungsform einer Filterhilfsmaterialeinbringeinrichtung 148 hinsichtlich Aufbau und Funktion mit der in den Fig. 1 bis 10 dargestellten Ausführungsformen überein, so dass auf deren vorstehende Beschreibung insoweit Bezug genommen wird.

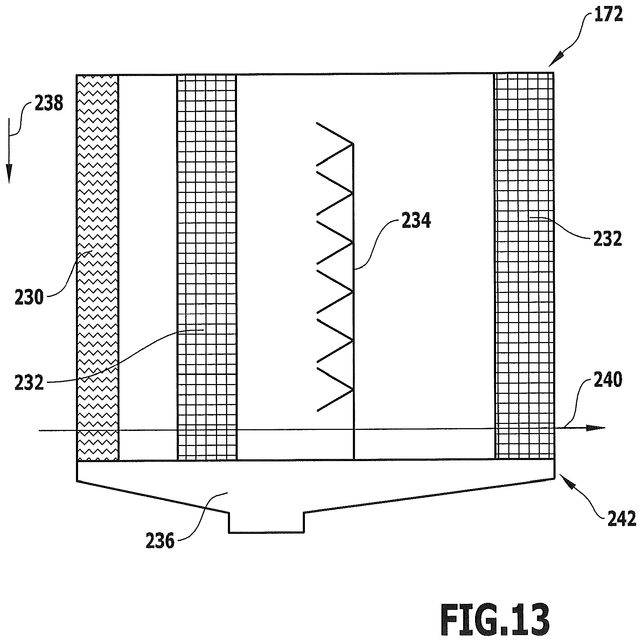

Eine in Figur 13 dargestellte Ausführungsform einer Konditioniervorrichtung 172 umfasst eine Kühlvorrichtung 230, zwei Tropfenabscheidungsvorrichtungen 232 und eine Befeuchtungsvorrichtung 234.

Bezüglich einer Durchströmungsrichtung 240 der Konditioniervorrichtung 172 sind nacheinander die Kühlvorrichtung 230, eine Tropfenabscheidungsvorrichtung 232, die Befeuchtungsvorrichtung 234 und die weitere Tropfenabscheidungsvorrichtung 232 angeordnet.

Eine Auffangwanne 236 ist bezüglich einer Schwerkraftrichtung 238 unter der Kühlvorrichtung 230, der Tropfenabscheidungsvorrichtungen 232 und der Befeuchtungsvorrichtung 234 angeordnet.

Mittels der Auffangwanne 236 kann im Betrieb der Konditioniervorrichtung 172 in der Kühlvorrichtung 230 anfallendes Kondensat, mittels der Tropfenabscheidungsvorrichtung 232 abgeschiedene Flüssigkeitstropfen und Flüssigkeit, welche von der Befeuchtungsvorrichtung 234 abgegeben, von dem Gasstrom jedoch nicht aufgenommen wurde, aufgefangen werden.

Die Auffangwanne 236 ist somit eine gemeinsame Auffangwanne 236 für sämtliche Konditionierelemente der Konditioniervorrichtung 172.

Die Konditioniervorrichtung 172 umfasst somit ein gemeinsames Flüssigkeitshandhabungssystem 242 zur Handhabung der im Betrieb der Konditioniervorrichtung 172 anfallenden oder verwendeten Flüssigkeiten, welches die Auffangwanne 236 umfasst.

Die in Figur 13 dargestellte Konditioniervorrichtung 172 funktioniert wie folgt:
Wenn ein Gasstrom die Konditioniervorrichtung 172 in der Durchströmungsrichtung 240 durchströmt, wird dieser mittels der Kühlvorrichtung 230 gekühlt. Hierbei kann sich ein Kondensat bilden, welches in der Schwerkraftrichtung 238 längs der Kühlvorrichtung 230 nach unten in die Auffangwanne 236 fließt.

Der mittels der Kühlvorrichtung 230 gekühlte Gasstrom wird anschließend durch eine erste Tropfenabscheidungsvorrichtung 232 geführt, um in dem Gasstrom befindliche Tropfen abscheiden zu können. Auch hierbei sammelt sich Flüssigkeit, welche in der Schwerkraftrichtung 238 nach unten in die Auffangwanne 236 fließt.

Mittels der in der Durchströmungsrichtung 240 stromabwärts der ersten Tropfenabscheidungsvorrichtung 232 angeordneten Befeuchtungsvorrichtung 234 wird der Gasstrom befeuchtet. Beispielsweise wird Flüssigkeit in den Gasstrom eingesprüht. Die von dem Gasstrom nicht aufgenommene Flüssigkeit wird ebenfalls mit der Auffangwanne 236 aufgefangen.

Die bezüglich der Durchströmungsrichtung 240 stromabwärts der Befeuchtungsvorrichtung 234 angeordnete weitere Tropfenabscheidungsvorrichtung 232 dient erneut der Abscheidung von Tropfen aus dem Gasstrom. Auch an dieser Tropfenabscheidungsvorrichtung 232 sammeln sich im Betrieb der Konditioniervorrichtung 172 Flüssigkeitstropfen, welche in der Schwerkraftrichtung 238 nach unten in die Auffangwanne 236 fließen.

Die gesamte im Betrieb der Konditioniervorrichtung 172 verwendete oder anfallende Flüssigkeit kann somit mittels der Auffangwanne 236 aufgefangen werden. Die Auffangwanne 236 bildet somit einen Bestandteil des gemeinsamen Flüssigkeitshandhabungssystems 242 der Konditioniervorrichtung 172.

Bei einer (nicht dargestellten) weiteren Ausführungsform einer Konditioniervorrichtung 172 ist die Befeuchtungsvorrichtung 234 direkt stromabwärts der Kühlvorrichtung 230 angeordnet. Mittels der Befeuchtungsvorrichtung 234 kann dabei auch die Kühlvorrichtung 230 mit Flüssigkeit benetzt werden. Hierdurch kann die Effizienz der Konditioniervorrichtung 172 bei der Befeuchtung des durch die Konditioniervorrichtung 172 geführten Gasstroms erhöht werden.

Die vorstehend beschriebenen Ausführungsformen von Konditioniervorrichtungen 172 eignen sich insbesondere zur Verwendung in einer Lackieranlage 100, insbesondere einer Filteranlage 106 einer Lackieranlage 100, beispielsweise in einem Filtermodul 184 einer Filteranlage 106.

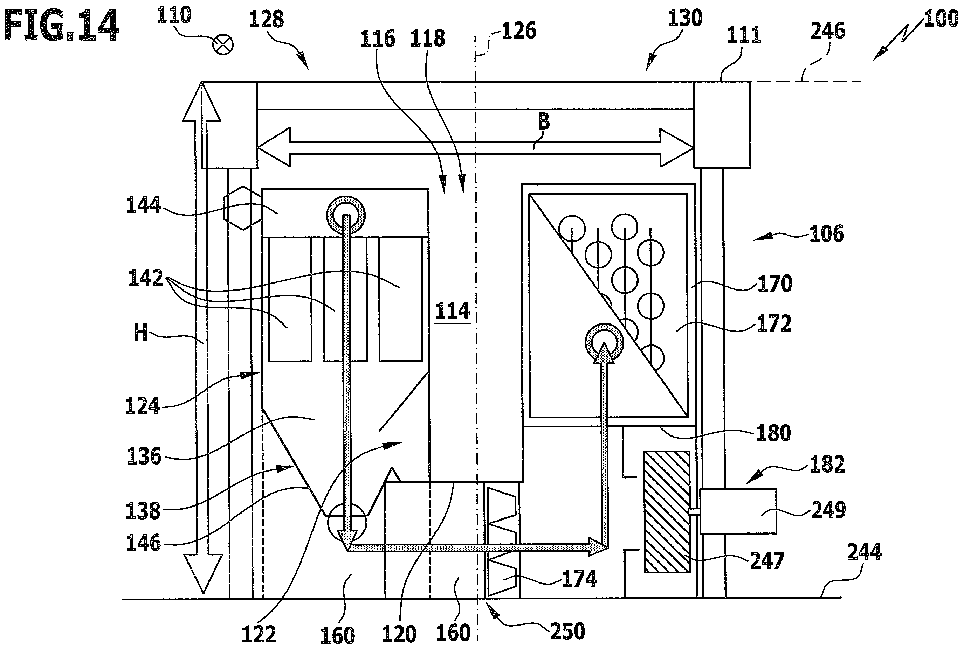

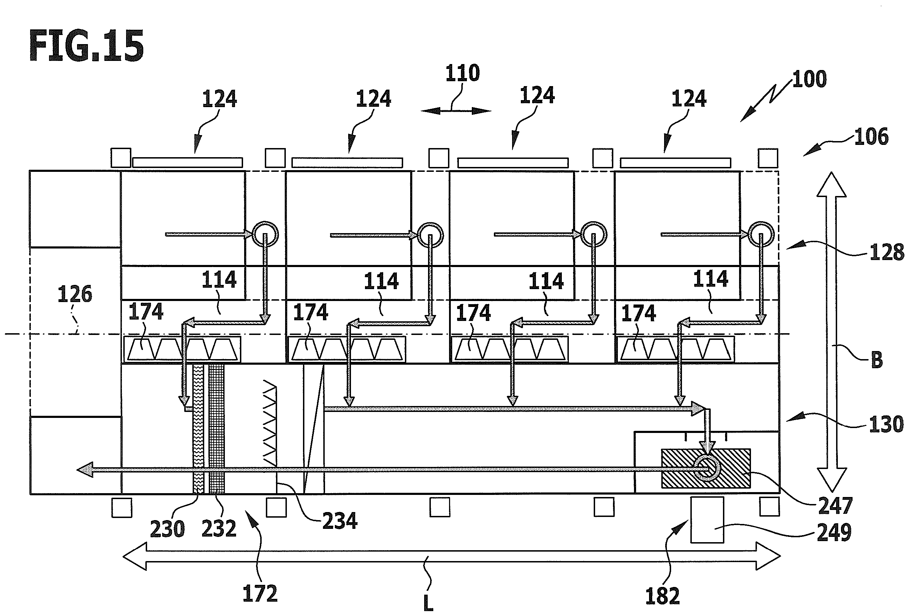

Eine in den Fig. 14 und 15 dargestellte alternative Ausführungsform einer Lackieranlage 100 unterscheidet sich von der in den Fig. 1 bis 13 dargestellten Ausführungsform im Wesentlichen dadurch, dass die Konditioniervorrichtung 172 bezüglich einer Strömungsrichtung des Reingasstroms stromabwärts des Ventilators 182 angeordnet ist.

Die Konditioniervorrichtung 172 ist dabei insbesondere über einer Trennwand 180 des Reingassammelkanals 170 angeordnet.

Die Filteranlage 106 der in den Fig. 14 und 15 dargestellten Ausführungsform einer Lackieranlage 100 weist vorzugsweise eine Höhe H von einem Boden 244, auf welchem die Lackieranlage 100 angeordnet ist, bis zu einer Gitterrostebene 246, welche die Lackierkabine 102 von der Filteranlage 106 trennt, von ungefähr 6 m auf. Eine Breite B der Filteranlage 106 beträgt vorzugsweise ungefähr 5 m.

Wie insbesondere Fig. 15 zu entnehmen ist, ist bei der in den Fig. 14 und 15 dargestellten Ausführungsform einer Lackieranlage 100 vorgesehen, dass die Filteranlage 106 vier Filtervorrichtungen 124 umfasst.

Die Reingasleitungen 160 der einzelnen Filtervorrichtungen 124 münden unterhalb der Trennwand 180 des Reingassammelkanals 170 in den Reingassammelkanal 170 und werden mittels eines Ventilators 182 in den Bereich oberhalb der Trennwand 180 des Reingassammelkanals 170 geführt. Der Ventilator 182 umfasst hierzu ein Laufrad 247, welches mittels eines Antriebs 249 antreibbar ist.

Die Drehachse des Laufrads 247 des Ventilators 182 kann im Wesentlichen horizontal und quer, vorzugsweise im Wesentlichen senkrecht, zu der Längsrichtung der Lackierkabine 102 und/oder zu der Förderrichtung 110 ausgerichtet sein.

Der Antrieb 249 des Laufrads 247 kann in einer senkrecht zu der Längsrichtung der Lackierkabine 102 und/oder senkrecht zu der Förderrichtung 110 gerichteten Querrichtung seitlich neben dem Ventilator 182, insbesondere seitlich neben dem Laufrad 247, angeordnet sein.

Der Antrieb 249 des Laufrads 247 kann zumindest teilweise, vorzugsweise im Wesentlichen vollständig, außerhalb der Grundfläche der Lackierkabine 102 oder außerhalb einer vertikalen Projektion der Grundfläche der Lackierkabine 102 angeordnet sein.

Die Drehachse des Laufrads 247 des Ventilators 182 kann aber auch anders ausgerichtet sein, beispielsweise im Wesentlichen horizontal und im Wesentlichen parallel zu der Längsrichtung der Lackierkabine 102 und/oder zu der Förderrichtung 110. Ferner kann die Drehachse des Laufrads 247 auch im Wesentlichen vertikal ausgerichtet sein.

Der Antrieb 249 des Laufrads 247 kann in der Längsrichtung der Lackierkabine 102 und/oder in der Förderrichtung 110 vor oder hinter dem Ventilator 182 angeordnet sein.

Der Antrieb 249 des Laufrads 247 kann auch vertikal unter oder über dem Ventilator 182 angeordnet sein.

Der Antrieb 249 des Laufrads 247 kann zumindest teilweise, vorzugsweise im Wesentlichen vollständig, innerhalb der Grundfläche der Lackierkabine 102 oder innerhalb einer vertikalen Projektion der Grundfläche der Lackierkabine 102 angeordnet sein.

In dem Bereich oberhalb der Trennwand 180 des Reingassammelkanals 170 ist die Konditioniervorrichtung 172 angeordnet, mittels welcher der in dem Reingassammelkanal 170 geführte Reingasstrom konditioniert werden kann.

Eine Gesamtlänge L der Filteranlage 106 der Lackieranlage 100 gemäß der in den Fig. 14 und 15 dargestellten Ausführungsform beträgt beispielsweise ungefähr 10 m.

Im Übrigen stimmt die in den Fig. 14 und 15 dargestellte Ausführungsform einer Lackieranlage 100 hinsichtlich Aufbau und Funktion mit der in den Fig. 1 bis 13 dargestellten Lackieranlage 100 überein, so dass auf deren vorstehende Beschreibung insoweit Bezug genommen wird.

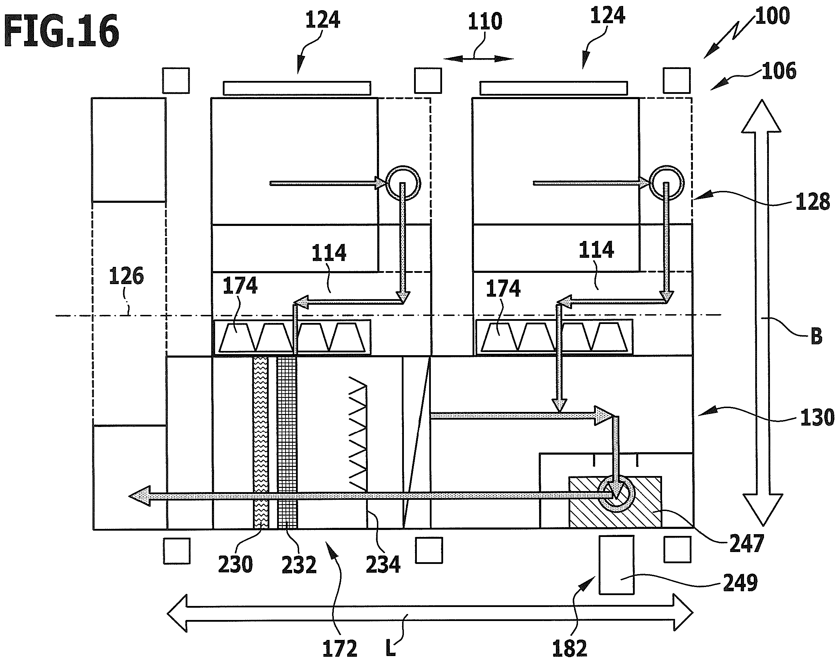

Eine in Fig. 16 dargestellte alternative Ausführungsform einer Lackieranlage 100 unterscheidet sich von der in den Fig. 14 und 15 dargestellten Ausführungsform im Wesentlichen dadurch, dass lediglich zwei Filtervorrichtungen 124 vorgesehen sind und die Filteranlage 106 der Lackieranlage 100 eine Länge L von ungefähr 6 m aufweist.

Im Übrigen stimmt die in Fig. 16 dargestellte alternative Ausführungsform einer Lackieranlage 100 hinsichtlich Aufbau und Funktion mit der in den Fig. 14 und 15 dargestellten Ausführungsform überein, so dass auf deren vorstehende Beschreibung insoweit Bezug genommen wird.

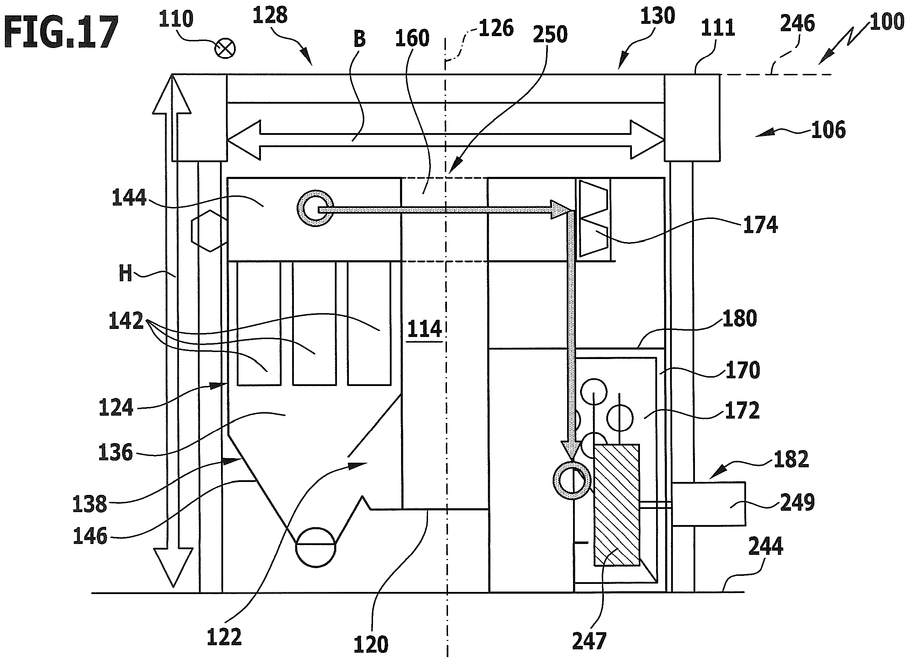

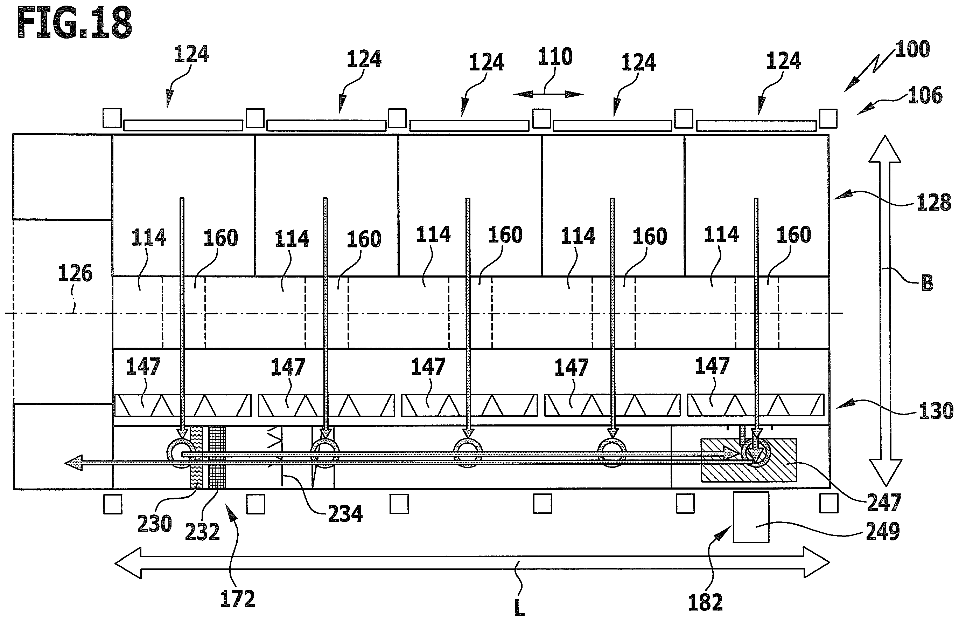

Eine in den Fig. 17 und 18 dargestellte erfindungsgemäße Ausführungsform einer Lackieranlage 100 unterscheidet sich von der in den Fig. 14 und 15 dargestellten Ausführungsform im Wesentlichen dadurch, dass die Reingasleitungen 160 der Filtervorrichtungen 124 ausgehend von den Reingaskammern 144 der Filtervorrichtungen 124 in im Wesentlichen horizontaler Richtung und im Wesentlichen senkrecht zur Förderrichtung 110 der Filtervorrichtung 108 zu dem Reingassammelkanal 170 geführt sind.

Die Reingasleitungen 160 sind damit bei der in den Fig. 17 und 18 dargestellten Ausführungsform einer Lackieranlage 100 nicht unter dem Rohgasschacht 114 angeordnet.

Vielmehr durchqueren die Reingasleitungen 160 den Rohgasschacht 114 im Bereich des oberen Endes 116 des Rohgasschachts 114.

Eine den Rohgasschacht 114 durchquerende Reingasleitung 160 umfasst einen Abschnitt, der innerhalb des Rohgasschachts 114 angeordnet ist, und kann einen oder mehrere Abschnitte umfassen, die außerhalb des Rohgasschachtes 114 angeordnet sind.

Die Reingasleitungen 160 münden dabei in den Bereich des Reingassammelkanals 170, welcher über der Trennwand 180 des Reingassammelkanals 170 angeordnet ist.

Es kann aber auch vorgesehen sein, dass mindestens eine der Reingasleitungen 160 an einer anderen Stelle zwischen dem unteren Ende 120 und dem oberen Ende 116 des Rohgasschachtes 114 oder oberhalb des Rohgasschachtes 114, vorzugsweise unterhalb des Lackierkabinenbodens 111, angeordnet ist.

Mittels des Ventilators 182 wird der im Bereich oberhalb der Trennwand 180 des Reingassammelkanals 170 gesammelte Reingasstrom in den Bereich unterhalb der Trennwand 180 des Reingassammelkanals 170 gefördert.

Die Konditioniervorrichtung 172 ist unter der Trennwand 180 in dem Reingassammelkanal 170 angeordnet, so dass der unter der Trennwand 180 des Reingassammelkanals 170 geführte Reingasstrom mittels der Konditioniervorrichtung 172 konditioniert werden kann.

Wie insbesondere Fig. 18 zu entnehmen ist, sind bei der in den Fig. 17 und 18 dargestellten Ausführungsform der Lackieranlage 100 fünf Filtervorrichtungen 124 vorgesehen.

Im Übrigen stimmt die in den Fig. 17 und 18 dargestellte Ausführungsform einer Lackieranlage 100 hinsichtlich Aufbau und Funktion mit der in den Fig. 14 und 15 dargestellten Ausführungsform überein, so dass auf deren vorstehende Beschreibung insoweit Bezug genommen wird.

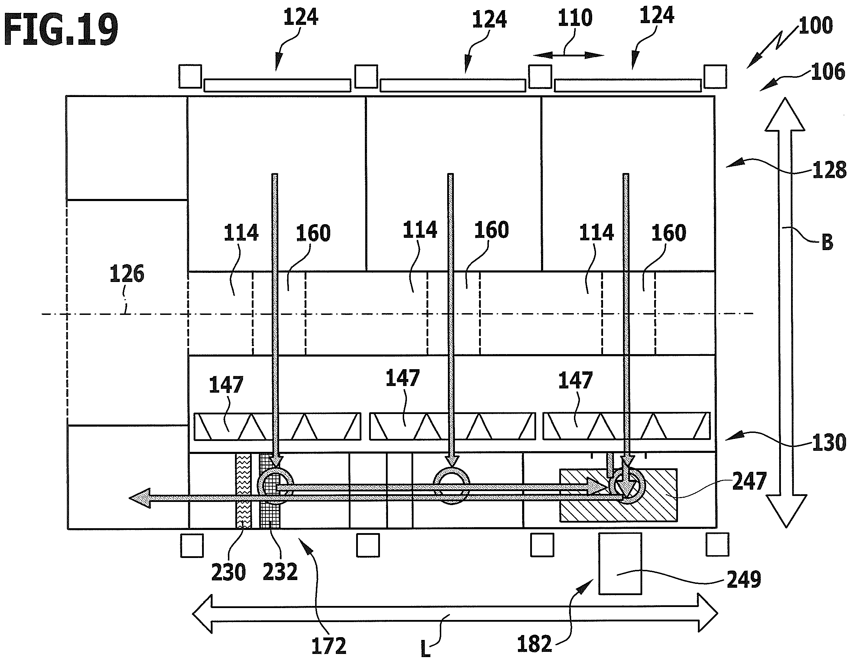

Eine in Fig. 19 dargestellte weitere alternative Ausführungsform einer Lackieranlage 100 unterscheidet sich von der in den Fig. 17 und 18 dargestellten Ausführungsform im Wesentlichen dadurch, dass lediglich drei Filtervorrichtungen 124 vorgesehen sind.

Die Länge L der Filteranlage 106 der Lackieranlage 100 beträgt dabei ungefähr 6 m.

Im Übrigen stimmt die in Fig. 19 dargestellte Ausführungsform einer Lackieranlage 100 hinsichtlich Aufbau und Funktion mit der in den Fig. 17 und 18 dargestellten Ausführungsform überein, so dass auf deren vorstehende Beschreibung insoweit Bezug genommen wird.

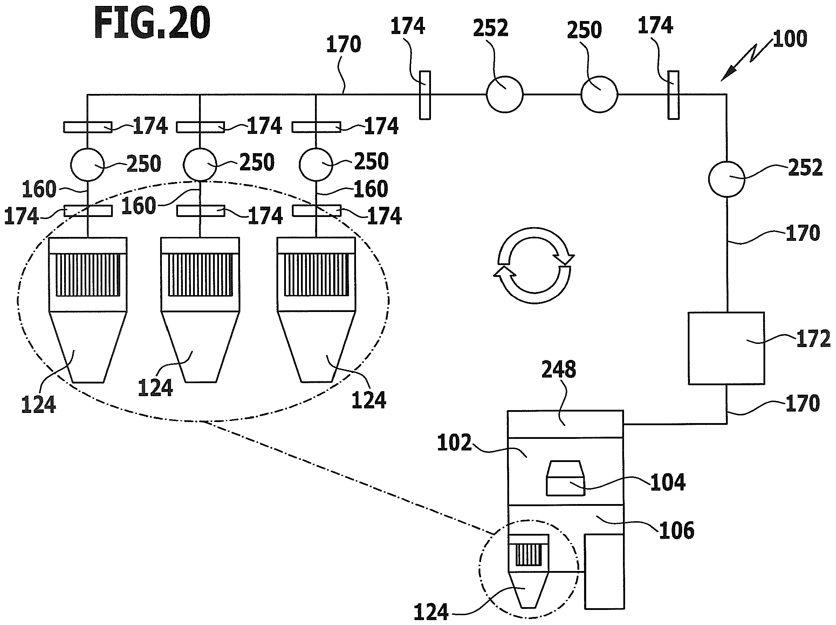

Fig. 20 ist eine schematische Darstellung zur Illustration der Funktionsweise der unterschiedlichen Ausführungsformen von Lackieranlagen 100.

Die zum Betrieb der Lackieranlage 100 benötigte Luft wird in einer Umluftführung geführt.

Die Luft wird dabei als Reingasstrom zunächst durch ein Plenum 248 der Lackieranlage 100 in die Lackierkabine 102 geleitet.

In der Lackierkabine 102 wird ein Werkstück 104 lackiert, wodurch der Reingasstrom mit Lack-Overspray beaufschlagt wird.

Der hierdurch verunreinigte Gasstrom wird als Rohgasstrom der Filteranlage 106 zugeführt und dort von Nasslack-Overspray befreit, so dass erneut ein Reingasstrom erhalten wird.

Die Reinigung erfolgt dabei mittels beispielhaft dreier Filtervorrichtungen 124.

Die erhältlichen Reingasströme werden über Reingasleitungen 160 einem Reingassammelkanal 170 zugeführt.

Mittels eines einzelnen oder mittels zweier Sammelkanäle 170 wird der gesammelte Reingasstrom schließlich einer Konditioniervorrichtung 172 zugeführt und konditioniert, um erneut über das Plenum 248 der Lackierkabine 102 der Lackieranlage 100 zugeführt werden zu können.

Insbesondere um im Falle einer Beschädigung einer Filtervorrichtung 124 das Eindringen von Filterhilfsmaterial in die Konditioniervorrichtung 172 zu verhindern, ist mindestens ein Sicherheitsfilter 174 vorgesehen.

Das Sicherheitsfilter 174 kann aufgrund seiner Funktion auch als Polizeifilter bezeichnet werden und dient insbesondere der Sicherheit bei einem Filterdurchbruch.

Grundsätzlich kann vorgesehen sein, dass Sicherheitsfilter 174 in jeder Reingasleitung 160 angeordnet sind. Die Sicherheitsfilter 174 können dabei bezüglich der vertikalen Längsmittelebene 126 der Lackieranlage 100 auf der Seite der Filtervorrichtung 124, das heißt vor einer Querung 250 der vertikalen Längsmittelebene 126, oder auf der Seite des Reingassammelkanals 170, das heißt nach der Querung 250 der vertikalen Längsmittelebene 126, angeordnet sein.

Alternativ oder ergänzend hierzu kann vorgesehen sein, dass mindestens ein Sicherheitsfilter 174 in dem Reingassammelkanal 170 angeordnet ist.

Ein Sicherheitsfilter 174 kann hierbei in Abhängigkeit von der Ausgestaltung des Reingassammelkanals 170 vor oder nach der Querung 250 der vertikalen Längsmittelebene 126 der Lackieranlage 100 angeordnet sein.

Insbesondere dann, wenn die Lackieranlage 100 eine Kanalverbindung 252 umfasst, welche als ein Kanalstück oder eine Verbindungsöffnung ausgebildet sein kann,kann vorgesehen sein, dass ein Sicherheitsfilter 174 vor oder nach der Kanalverbindung 252 angeordnet ist.

Die Kanalverbindung 252 kann dabei vor oder nach der Querung 250 der vertikalen Längsmittelebene 126 angeordnet sein.

Die Angaben "vor" und "nach" beziehen sich dabei stets auf die Strömungsrichtung des Reingasstroms oder Rohgasstroms.

Zum Antreiben der Luftströmung, insbesondere des Reingasstroms und des Rohgasstroms kann ein gemeinsamer Ventilator 182, beispielsweise in dem Reingassammelkanal 170, vorgesehen sein.

Alternativ oder ergänzend hierzu kann vorgesehen sein, dass ein Ventilator 182 in einer Kanalverbindung 252, innerhalb einer Querung 250 der vertikalen Längsmittelebene 126 und/oder in einer Reingasleitung 160 angeordnet ist. Insbesondere kann vorgesehen sein, dass in jeder Reingasleitung 160 ein Ventilator 182 angeordnet ist.

Die Konditioniervorrichtung 172 kann zur Konditionierung des gesamten Reingasstroms in dem Reingassammelkanal 170 angeordnet sein.

Alternativ oder ergänzend hierzu kann vorgesehen sein, dass in jeder Reingasleitung 160 eine Konditioniervorrichtung 172 angeordnet ist.

Insbesondere dann, wenn mehrere Konditioniervorrichtungen 172 vorgesehen sind, kann vorgesehen sein, dass jede Konditioniervorrichtung 172 sämtliche Parameter des Gasstroms konditioniert, das heißt, dass der Gasstrom insbesondere hinsichtlich seiner Temperatur und seiner Luftfeuchtigkeit konditioniert wird. Alternativ hierzu kann vorgesehen sein, dass mittels der Konditioniervorrichtungen 172 unterschiedliche Parameter konditioniert werden, das heißt, dass beispielsweise mittels einer Konditioniervorrichtung 172 ein Befeuchtungsvorgang und mittels einer weiteren Konditioniervorrichtung 172 ein Aufheizen des Reingasstroms durchgeführt wird. Durch die Zuführung der Reingasströme zu dem Reingassammelkanal 170 wird dann vorzugsweise ein vollständig konditionierter Gesamtluftstrom erhalten.

Insbesondere dann, wenn die Lackieranlage 100 eine Kanalverbindung 252 umfasst, kann vorgesehen sein, dass die Filteranlage 106 zwei Reingassammelkanäle 170, nämlich einen Reingassammelkanal 170 vor der Kanalverbindung 252 und einen Reingassammelkanal 170 nach der Kanalverbindung 252, umfasst.

## Patentansprüche

1. Lackieranlage zum Lackieren von Werkstücken (104), umfassend:
- eine Lackierkabine (102), in welcher die Werkstücke (104) mit Lack lackierbar sind;
- eine Fördervorrichtung (108), mittels welcher die zu lackierenden Werkstücke (104) in einer Förderrichtung (110) durch die Lackierkabine (102) hindurch förderbar sind;
- eine Abscheide- und/oder Filteranlage (106) zum Reinigen eines die Lackierkabine (102) verlassenden Rohgasstroms, der in der Lackierkabine (102) Lack-Overspray aufgenommen hat, wobei die Abscheide- und/oder Filteranlage (106) mindestens zwei Filtervorrichtungen (124) zum Abtrennen des Lack-Overspray aus dem Rohgasstrom und mindestens zwei Reingasleitungen (160) für Reingasströme, welche durch Reinigung des Rohgasstroms mittels der mindestens zwei Filtervorrichtungen (124) erhältlich sind, umfasst,
wobei die Abscheide- und/oder Filteranlage (106) mindestens einen Rohgasschacht (114) umfasst, welcher bezüglich einer senkrecht zur Förderrichtung (110) verlaufenden horizontalen Richtung im Wesentlichen mittig unter der Lackierkabine (102) angeordnet ist, wobei die Abscheide- und/oder Filteranlage (106) mindestens einen Reingassammelkanal (170) umfasst, in welchen die mindestens zwei Reingasleitungen (160) der Abscheide- und/oder Filteranlage (106) münden, wobei der mindestens eine Reingassammelkanal (170) einerseits und die mindestens zwei Filtervorrichtungen (124) andererseits auf bezüglich einer vertikalen Längsmittelebene (126) der Lackierkabine (102) einander gegenüberliegenden Seiten (128, 130) der Abscheide- und/oder Filteranlage (106) angeordnet sind,
wobei eine der mindestens zwei Reingasleitungen (160), welche in den Reingassammelkanal (170) münden, den Rohgasschacht (114) kreuzt und/oder durchquert,
wobei die Reingasleitung (160) in einem Betrieb der Lackieranlage (100) von Rohgas umströmt wird.

2. Lackieranlage nach Anspruch 1, **dadurch gekennzeichnet, dass** die Abscheide- und/oder Filteranlage (106) mindestens eine Reingasleitung (160), mindestens einen Ventilator (182), mindestens eine Konditioniervorrichtung (172) und/oder mindestens einen Reingassammelkanal (170) umfasst, welche innerhalb einer vertikalen Projektion der Lackierkabine (102) unter der Lackierkabine (102) angeordnet sind.

3. Lackieranlage nach Anspruch 1 oder 2, **dadurch gekennzeichnet, dass** die Abscheide- und/oder Filteranlage (106) mindestens eine Reingasleitung (160) umfasst, welche zumindest abschnittsweise unter dem Rohgasschacht (114) angeordnet ist.

4. Lackieranlage nach einem der Ansprüche 1 bis 3, **dadurch gekennzeichnet, dass** mindestens eine Reingasleitung (160) zumindest abschnittsweise innerhalb einer Außenkontur (163) mindestens einer Filtervorrichtung (124) angeordnet ist.

5. Lackieranlage nach einem der Ansprüche 1 bis 4, **dadurch gekennzeichnet, dass** die Abscheide- und/oder Filteranlage (106) mindestens ein Filtermodul (184) umfasst, welches mindestens eine Filtervorrichtung (124), mindestens eine Reingasleitung (160), mindestens eine Konditioniervorrichtung (172) und/oder mindestens einen Ventilator (182) umfasst.

6. Lackieranlage nach einem der Ansprüche 1 bis 2. 5, **dadurch gekennzeichnet, dass** mindestens eine Filtervorrichtung (124) zum Abtrennen von Lack-Overspray aus dem Overspray-Partikel enthaltenden Rohgasstrom Folgendes umfasst:
- eine Einhausung (134), welche eine Rohgaskammer (136) der Filtervorrichtung (124) begrenzt und in welcher mindestens ein Filterelement der Filtervorrichtung (124) angeordnet ist;
- mindestens einen Einlasskanal (122) zum Einlassen des Rohgasstroms in die Rohgaskammer (136) der Filtervorrichtung (124); und
- mindestens eine Filterhilfsmaterialeinbringeinrichtung (148) zum Einbringen von Filterhilfsmaterial in den Rohgasstrom,
wobei mindestens eine Reingasleitung (160) der Filtervorrichtung (124) zumindest abschnittsweise innerhalb einer Außenkontur (163) mindestens einer Filtervorrichtung (124) angeordnet ist und
wobei in mindestens einer Reingasleitung (160) mindestens ein Sicherheitsfilter (174) vorgesehen ist.

7. Lackieranlage nach Anspruch 6, **dadurch gekennzeichnet, dass** mindestens eine Filterhilfsmaterialeinbringeinrichtung (148) eine Behandlungsvorrichtung (150) zum mechanischen Behandeln von Filterhilfsmaterial und/oder eines Gemisches aus Filterhilfsmaterial und Overspray-Partikeln umfasst.

8. Lackieranlage nach einem der Ansprüche 6 oder 7, **dadurch gekennzeichnet, dass** die mindestens eine Filterhilfsmaterialeinbringeinrichtung (148) eine Strömungsführungsvorrichtung (156) zur Beeinflussung der Strömung des Rohgasstroms umfasst, welche mindestens ein hinsichtlich Gestalt und/oder Anordnung und/oder Ausrichtung variables Strömungselement (158c) umfasst, das insbesondere als verstellbar und/oder verschwenkbar angeordnetes Leitblech (188) ausgebildet ist.

9. Lackieranlage nach einem der Ansprüche 6 bis 8, **dadurch gekennzeichnet, dass** die Filtervorrichtung (124) eine Steuervorrichtung (198) umfasst, mittels welcher eine Einbringleistung der mindestens einen Filterhilfsmaterialeinbringeinrichtung (148) steuerbar und/oder regelbar ist.

10. Lackieranlage nach einem der Ansprüche 1 bis 9, **dadurch gekennzeichnet, dass** mindestens eine Filtervorrichtung (124) der Abscheide- und/oder Filteranlage (106) mindestens eine Strömungsführungsvorrichtung (156) umfasst, welche in der Rohgaskammer (136) der Filtervorrichtung (124) angeordnet ist und mittels welcher der durch mindestens einen Einlasskanal (122) der Filtervorrichtung (124) in die Rohgaskammer (136) strömende Rohgasstrom beeinflussbar ist.

11. Lackieranlage nach einem der Ansprüche 1 bis 10, **dadurch gekennzeichnet, dass** die Abscheide- und/oder Filteranlage (106) eine Konditioniervorrichtung (172) umfasst, welche eine Kühlvorrichtung (230), eine Befeuchtungsvorrichtung (234) und/oder eine Tropfenabscheidungsvorrichtung (232) sowie ein gemeinsames Flüssigkeitshandhabungssystem (242) für die Kühlvorrichtung (230), die Befeuchtungsvorrichtung (234) und/oder die Tropfenabscheidungsvorrichtung (232) umfasst.

## Claims

1. Painting installation for painting workpieces (104), comprising:
- a painting booth (102), in which the workpieces (104) are paintable with paint;
- a conveying device (108), by means of which the workpieces (104) to be painted are conveyable in a conveying direction (110) through the painting booth (102);
- a separation and/or filter system (106) for cleaning a raw gas flow, which is leaving the painting booth (102) and has absorbed paint overspray in the painting booth (102), wherein the separation and/or filter system (106) comprises at least two filter devices (124) for separating the paint overspray from the raw gas flow and at least two clean gas lines (160) for clean gas flows, which are obtainable by cleaning the raw gas flow by means of the at least two filter devices (124),
wherein the separation and/or filer system (106) comprises at least one raw gas shaft (114), which is arranged substantially centrally below the painting booth (102) with respect to a horizontal direction running perpendicular to the conveying direction (110),
wherein the separation and/or filter system (106) comprises at least one clean gas collecting channel (170), into which the at least two clean gas lines (160) of the separation and/or filter system (106) open, wherein the at least one clean gas collecting channel (170), on the one hand, and the at least two filter devices (124), on the other hand, are arranged on mutually opposing sides (128, 130) of the separation and/or filter system (106) with respect to a vertical longitudinal centre plane (126) of the painting booth (102),
wherein one of the at least two clean gas lines (160), which open into the clean gas collecting channel (170), crosses and/or traverses the raw gas shaft (114),
wherein raw gas preferably flows around the clean gas line (160) during an operation of the painting installation (100).

2. Painting installation according to Claim 1, **characterized in that** the separation and/or filter system (106) comprises at least one clean gas line (160), at least one fan (182), at least one conditioning device (172) and/or at least one clean gas collecting channel (170), which are arranged within a vertical projection of the painting booth (102) below the painting booth (102).

3. Painting installation according to Claims 1 or 2, **characterized in that** the separation and/or filter system (106) comprises at least one clean gas line (160) which is arranged, at least in portions, below the raw gas shaft (114).

4. Painting installation according to any one of Claims 1 to 3, **characterized in that** at least one clean gas line (160) is arranged, at least in portions, within an outer contour (163) of at least one filter device (124).

5. Painting installation according to any one of Claims 1 to 4, **characterized in that** the separation and/or filter system (106) comprises at least one filter module (184), which comprises at least one filter device (124), at least one clean gas line (160), at least one conditioning device (172) and/or at least one fan (182).

6. Painting installation in accordance with any one of Claims 1 to 5, **characterized in that** at least one filter device (124) for the separation of paint overspray from the raw gas flow containing overspray particles comprises:
- a housing (134), which delimits a raw gas chamber (136) of the filter device (124) and in which at least one filter element of the filter device (124) is arranged;
- at least one inlet channel (122) for letting the raw gas flow into the raw gas chamber (136) of the filter device (124); and
- at least one auxiliary filter material introduction mechanism (148) for introducing auxiliary filter material into the raw gas flow,
wherein at least one clean gas line (160) of the filter device (124) is arranged, at least in portions, within an outer contour (163) of at least one filter device (124) and
wherein at least one safety filter (174) is provided in at least one clean gas line (160).

7. Painting installation according to Claim 6, **characterized in that** at least one auxiliary filter material introduction mechanism (148) comprises a treatment device (150) for the mechanical treatment of auxiliary filter material and/or a mixture of auxiliary filter material and overspray particles.

8. Painting installation according to either of Claims 6 or 7, **characterized in that** the at least one auxiliary filter material introduction mechanism (148) comprises a flow guidance device (156) for influencing the flow of the raw gas flow, which device comprises at least one flow element (158c), which is variable with respect to configuration and/or arrangement and/or orientation and is, in particular, configured as an adjustably and/or pivotably arranged guide plate (188).

9. Painting installation according to any one of Claims 6 to 8, **characterized in that** the filter device (124) comprises a control device (198), by means of which an introduction capacity of the at least one auxiliary filter material introduction mechanism (148) is controllable and/or regulatable.

10. Painting installation according to any one of Claims 1 to 9, **characterized in that** at least one filter device (124) of the separation and/or filter system (106) comprises at least one flow guidance device (156), which is arranged in the raw gas chamber (136) of the filter device (124) and by means of which the raw gas flow flowing through at least one inlet channel (122) of the filter device (124) into the raw gas chamber (136) is influenceable.

11. Painting installation according to any one of Claims 1 to 10, **characterized in that** the separation and/or filter system (106) comprises a conditioning device (172), which comprises a cooling device (230), a humidifying device (234) and/or a drop-separation device (232) as well as a common liquid handling system (242) for the cooling device (230), the humidifying device (234) and/or the drop-separation device (232).

## Revendications

1. Installation de mise en peinture pour la mise en peinture de pièces à usiner (104), comprenant :
- une cabine de mise en peinture (102), dans laquelle les pièces à usiner (104) peuvent être mises en peinture avec de la peinture ;
- un dispositif de transport (108), au moyen duquel les pièces à usiner (104) à mettre en peinture peuvent être transportées dans un sens de transport (110) à travers la cabine de mise en peinture (102) ;
- une installation de séparation et/ou de filtration (106) pour le nettoyage d'un courant de gaz brut quittant la cabine de mise en peinture (102) qui a reçu dans la cabine de mise en peinture (102) un excès de projection de peinture, dans laquelle l'installation de séparation et/ou de filtration (106) comporte au moins deux dispositifs de filtration (124) pour la séparation de l'excès de projection de peinture du courant de gaz brut et au moins deux conduits de gaz pur (160) pour des courants de gaz pur qui peuvent être obtenus par nettoyage du courant de gaz brut au moyen des au moins deux dispositifs de filtration (124),
dans laquelle l'installation de séparation et/ou de filtration (106) comporte au moins un puits de gaz brut (114) qui est agencé par rapport à un sens horizontal s'étendant perpendiculairement au sens de transport (110) sensiblement au milieu sous la cabine de mise en peinture (102), dans lequel l'installation de séparation et/ou de filtration (106) comporte au moins un canal de collecte de gaz pur (170), dans lequel les au moins deux conduits de gaz pur (160) de l'installation de séparation et/ou de filtration (106) débouchent, dans lequel l'au moins un canal de collecte de gaz pur (170) d'une part et les au moins deux dispositifs de filtration (124) d'autre part sont agencés sur des côtés (128, 130) opposés l'un à l'autre par rapport à un plan médian longitudinal vertical (126) de la cabine de mise en peinture (102) de l'installation de séparation et/ou de filtration (106),
dans lequel un des au moins deux conduits de gaz pur (160) qui débouchent dans le canal de collecte de gaz pur (170), croise et/ou traverse le puits de gaz brut (114), dans lequel le conduit de gaz pur (160) est contourné par du gaz brut dans un fonctionnement de l'installation de mise en peinture (100).

2. Installation de mise en peinture selon la revendication 1, **caractérisée en ce que** l'installation de séparation et/ou de filtration (106) comporte au moins un conduit de gaz pur (160), au moins un ventilateur (182), au moins un dispositif de conditionnement (172) et/ou au moins un canal de collecte de gaz pur (170) qui sont agencés à l'intérieur d'une projection verticale de la cabine de mise en peinture (102) sous la cabine de mise en peinture (102).

3. Installation de mise en peinture selon la revendication 1 ou 2, **caractérisée en ce que** l'installation de séparation et/ou de filtration (106) comporte au moins un conduit de gaz pur (160) qui est agencé au moins par sections sous le puits de gaz brut (114).

4. Installation de mise en peinture selon l'une quelconque des revendications 1 à 3, **caractérisée en ce qu'**au moins un conduit de gaz pur (160) est agencé au moins par sections à l'intérieur d'un contour extérieur (163) au moins d'un dispositif de filtration (124).

5. Installation de mise en peinture selon l'une quelconque des revendications 1 à 4, **caractérisée en ce que** l'installation de séparation et/ou de filtration (106) comporte au moins un module de filtration (184) qui comporte au moins un dispositif de filtration (124), au moins un conduit de gaz pur (160), au moins un dispositif de conditionnement (172) et/ou au moins un ventilateur (182).

6. Installation de mise en peinture selon l'une quelconque des revendications 1 à 5, **caractérisée en ce qu'**au moins un dispositif de filtration (124) comporte pour la séparation de l'excès de projection de peinture du courant de gaz brut contenant des particules d'excès de projection ce qui suit :
- un boîtier (134) qui délimite une chambre de gaz brut (136) du dispositif de filtration (124) et dans lequel au moins un élément de filtration du dispositif de filtration (124) est agencé ;
- au moins un canal d'entrée (122) pour l'entrée de courant de gaz brut dans la chambre de gaz brut (136) du dispositif de filtration (124) ;
et
- au moins un dispositif d'introduction de matériau auxiliaire de filtration (148) pour l'introduction de matériau auxiliaire de filtration dans le courant de gaz brut,
dans lequel au moins un conduit de gaz pur (160) du dispositif de filtration (124) est agencé au moins par sections à l'intérieur d'un contour extérieur (163) au moins d'un dispositif de filtration (124) et
dans lequel au moins un filtre de sécurité (174) est prévu dans au moins un conduit de gaz pur (160).

7. Installation de mise en peinture selon la revendication 6, **caractérisée en ce qu'**au moins un dispositif d'introduction de matériau auxiliaire de filtration (148) comporte un dispositif de traitement (150) pour le traitement mécanique de matériau auxiliaire de filtration et/ou d'un mélange de matériau auxiliaire de filtration et de particules d'excès de projection de peinture.

8. Installation de mise en peinture selon l'une quelconque des revendications 6 ou 7, **caractérisée en ce que** l'au moins un dispositif d'introduction de matériau auxiliaire de filtration (148) comporte un dispositif de guidage d'écoulement (156) pour l'influence de l'écoulement du courant de gaz brut qui comporte au moins un élément d'écoulement (158c) variable en ce qui concerne la forme et/ou l'agencement et/ou l'orientation qui est réalisé en particulier comme tôle de déflexion (188) agencée de manière réglable et/ou pivotante.

9. Installation de mise en peinture selon l'une quelconque des revendications 6 à 8, **caractérisée en ce que** le dispositif de filtration (124) comporte un dispositif de commande (198), au moyen duquel une puissance d'introduction d'au moins un dispositif d'introduction de matériau auxiliaire de filtration (148) peut être commandée et/ou régulée.

10. Installation de mise en peinture selon l'une quelconque des revendications 1 à 9, **caractérisée en ce qu'**au moins un dispositif de filtration (124) de l'installation de séparation et/ou de filtration (106) comporte au moins un dispositif de guidage d'écoulement (156) qui est agencé dans la chambre de gaz brut (136) du dispositif de filtration (124) et au moyen duquel le courant de gaz brut s'écoulant à travers au moins un canal d'entrée (122) du dispositif de filtration (124) dans la chambre de gaz brut (136) peut être influencé.

11. Installation de mise en peinture selon l'une quelconque des revendications 1 à 10, **caractérisée en ce que** le dispositif de séparation et/ou de filtration (106) comporte un dispositif de conditionnement (172) qui comporte un dispositif de refroidissement (230), un dispositif d'humidification (234) et/ou un dispositif de séparation de goutte (232) ainsi qu'un système de manipulation de liquide (242) commun pour le dispositif de refroidissement (230), le dispositif d'humidification (234) et/ou le dispositif de séparation de goutte (232).
